(19) **Europäisches Patentamt / European Patent Office / Office européen des brevets**

(11) **EP 4 657 787 A1**

(12) # EUROPEAN PATENT APPLICATION
published in accordance with Art. 153(4) EPC

(43) Date of publication:
**03.12.2025 Bulletin 2025/49**

(21) Application number: **23932516.0**

(22) Date of filing: **14.04.2023**

(51) International Patent Classification (IPC):
**H04L 5/00** (2006.01)     **H04W 72/00** (2023.01)

(52) Cooperative Patent Classification (CPC):
**H04L 5/00; H04W 72/00**

(86) International application number:
**PCT/CN2023/088470**

(87) International publication number:
**WO 2024/212234 (17.10.2024 Gazette 2024/42)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **New H3C Technologies Co., Ltd.**
**Hangzhou, Zhejiang 310052 (CN)**

(72) Inventors:
- **KONG, Lei**
  **Beijing 100102 (CN)**
- **ZHOU, Lei**
  **Beijing 100102 (CN)**

(74) Representative: **2SPL Patentanwälte PartG mbB**
**Landaubogen 3**
**81373 München (DE)**

(54) ## CSI-RS TRANSMISSION METHOD AND APPARATUS, AND DEVICE

(57) The present disclosure provides CSI-RS transmission methods, apparatuses and devices. The method includes: receiving resource configuration information corresponding to at least one CSI-RS resource set sent by a base station, where the resource configuration information is used to indicate the at least one CSI-RS resource set, and the at least one CSI-RS resource set includes a CSI-RS resource located in an SBFD symbol, the CSI-RS resource exceeds a range of a downlink subband in the SBFD symbol, or the CSI-RS resource is located within a downlink subband in the SBFD symbol; receiving a CSI-RS sent by the base station based on the CSI-RS resource in the at least one CSI-RS resource set, measuring the received CSI-RS and reporting a measurement result to the base station. Through the solution of the present disclosure, resource utilization rate can be improved.

Receive resource configuration information corresponding to at least one CSI-RS resource set sent by a base station, where the resource configuration information is used to indicate the at least one CSI-RS resource set, and the at least one CSI-RS resource set includes a CSI-RS resource located in an SBFD symbol, the CSI-RS resource may exceed a range of a downlink subband in the SBFD symbol, or the CSI-RS resource may locate within the downlink subband in the SBFD symbol — 111

Receive a CSI-RS sent by the base station based on the CSI-RS resource in the at least one CSI-RS resource set — 112

FIG. 1A

Send resource configuration information corresponding to at least one CSI-RS resource set to a user equipment, where the resource configuration information is used to indicate the at least one CSI-RS resource set used by the user equipment, and the at least one CSI-RS resource set includes a CSI-RS resource located in an SBFD symbol, the CSI-RS resource may exceed a range of a downlink subband in the SBFD symbol, or the CSI-RS resource may locate within the downlink subband in the SBFD symbol — 121

Send a CSI-RS to the user equipment based on the CSI-RS resource in the at least one CSI-RS resource set, so that the user equipment receives the CSI-RS based on the CSI-RS resource in the CSI-RS resource set — 122

FIG. 1B

EP 4 657 787 A1

**Description**

**TECHNICAL FIELD**

The present disclosure relates to the field of communication technologies, and in particular to, CSI-RS transmission methods, apparatuses and devices.

**BACKGROUND**

A time division duplex (TDD) system is widely used in mobile communication systems, such as 5G systems. In the TDD system, a frame structure may be divided into downlink (DL) slots, uplink (UL) slots, and flexible slots.

A DL slot includes a plurality of DL symbols, and downlink data is processed in frequency domain resources corresponding to these DL symbols. A UL slot includes a plurality of UL symbols, and uplink data is processed in frequency domain resources corresponding to these UL symbols. A flexible slot includes at least one flexible (F) symbol, the F symbol may be used for DL, i.e., downlink data is processed in frequency domain resource corresponding to the F symbol, the F symbol may also be used for UL, i.e., uplink data is processed in the frequency domain resource corresponding to the F symbol, and the F symbol may also be used for guard period (GP), i.e., uplink and downlink switching protection is performed in the frequency domain resource corresponding to the F symbol.

The TDD system can operate in a half-duplex (HD) mode, i.e., the same frequency domain resource can be used only for UL or DL at the same moment.

SUMMARY

The present disclosure provides a CSI-RS transmission method, performed by a user equipment, including:

receiving resource configuration information corresponding to at least one CSI-RS resource set sent by a base station, where the resource configuration information is used to indicate the at least one CSI-RS resource set, and the at least one CSI-RS resource set includes a CSI-RS resource located in an SBFD symbol, the CSI-RS resource exceeds a range of a downlink subband in the SBFD symbol, or the CSI-RS resource is located within a downlink subband in the SBFD symbol; and
receiving a CSI-RS sent by the base station based on the CSI-RS resource in the at least one CSI-RS resource set.

The present disclosure provides a CSI-RS transmission method, performed by a base station, including:

sending resource configuration information corresponding to at least one CSI-RS resource set to a user equipment, where the resource configuration information is used to indicate the at least one CSI-RS resource set used by the user equipment, and the at least one CSI-RS resource set includes a CSI-RS resource located in an SBFD symbol, the CSI-RS resource exceeds a range of a downlink subband in the SBFD symbol, or the CSI-RS resource is located within a downlink subband in the SBFD symbol;
sending a CSI-RS to the user equipment based on the CSI-RS resource in the at least one CSI-RS resource set, so that the user equipment receives the CSI-RS based on the CSI-RS resource in the at least one CSI-RS resource set.

The present disclosure provides a CSI-RS transmission apparatus, performed by a user equipment, including:

a first receiving module, configured to receive resource configuration information corresponding to at least one CSI-RS resource set sent by a base station, where the resource configuration information is used to indicate the at least one CSI-RS resource set, and the at least one CSI-RS resource set includes a CSI-RS resource located in an SBFD symbol, the CSI-RS resource exceeds a range of a downlink subband in the SBFD symbol, or the CSI-RS resource is located within a downlink subband in the SBFD symbol;
a second receiving module, configured to receive a CSI-RS sent by the base station based on the CSI-RS resource in the at least one CSI-RS resource set.

The present disclosure provides a CSI-RS transmission apparatus, performed by a base station, including:

a first sending module, configured to send resource configuration information corresponding to at least one CSI-RS resource set to a user equipment, where the resource configuration information is used to indicate the at least one CSI-RS resource set used by the user equipment, and the at least one CSI-RS resource set includes a CSI-RS resource located in an SBFD symbol, the CSI-RS resource exceeds a range of a downlink subband in the SBFD symbol, or the CSI-RS resource is located within a downlink subband in the SBFD symbol;

a second sending module, configured to send a CSI-RS to the user equipment based on the CSI-RS resource in the at least one CSI-RS resource set, so that the user equipment receives the CSI-RS based on the CSI-RS resource in the at least one CSI-RS resource set.

The present disclosure provides a user equipment, including a processor and a machine-readable storage medium, where the machine-readable storage medium stores machine-executable instructions executable by the processor, and the processor is configured to execute the machine-executable instructions to implement the CSI-RS transmission method of the above examples.

The present disclosure provides a base station, including a processor and a machine-readable storage medium, where the machine-readable storage medium stores machine-executable instructions executable by the processor, and the processor is configured to execute the machine-executable instructions to implement the CSI-RS transmission method of the above examples.

It can be seen from the above technical solution that user equipment (UE) receives the channel state information reference signal (CSI-RS) by using CSI-RS resource(s) in the CSI-RS resource set(s), and the base station transmits CSI-RS by using CSI-RS resource(s) in the CSI-RS resource set(s). Under the condition that a subband full duplex (SBFD) time-frequency resource overlaps with a CSI-RS resource, the SBFD time-frequency resource may be used for CSI-RS transmission, which improves transmission downlink data reliability and cell coverage radius, reduces uplink and downlink interference caused by SBFD time-frequency resource, so that SBFD time-frequency resource allocation and CSI-RS transmission mechanism can be effectively combined and implemented. From the perspective of a whole system, it can support CSI-RS transmission of a TDD system, improve resource utilization, improve network coverage and network capacity, increase downlink transmission resources, reduce downlink transmission delay and increase downlink transmission capacity.

## BRIEF DESCRIPTION OF DRAWINGS

FIGS. 1A and 1B are schematic flowcharts of CSI-RS transmission methods in an example;

FIG. 2 is a schematic diagram of SBFD time-frequency resources in an example;

FIG. 3 is a schematic diagram of a CSI-RS resource set configured with SBFD symbols and common symbols in an example;

FIG. 4 is a schematic diagram of a CSI subband misaligned with a UL subband in an example;

FIG. 5 is a schematic diagram of a CSI-RS resource set configured with SBFD symbols in an example;

FIGS. 6A and 6B are schematic structural diagrams of CSI-RS transmission apparatuses in an example;

FIG. 7A is a schematic structural diagram of a user equipment in an example; and

FIG. 7B is a schematic structural diagram of a base station in an example.

## DETAILED DESCRIPTION

Terms used in embodiments of the present disclosure are only for a purpose of describing specific embodiments, and are not limiting the present disclosure. Singular forms of "a", "said", and "the" used in the present disclosure and in the claims are also intended to include majority forms, unless the context clearly indicates otherwise. It should also be understood that the term "and/or" as used herein refers to any or all of the possible combinations containing one or more of the listed items in association.

It should be understood that although terms first, second, third, etc. may be used to describe various information in the embodiments of the present disclosure, these information should not be limited to these terms. These terms are used only to distinguish the same type of information from one another. For example, without departing from the scope of the present disclosure, first information can also be called second information, and similarly, the second information can also be called the first information. Depending on the context, in addition, the word "if" used can be interpreted as "at" or "when" or "in response to determining".

A TDD system can operate in a HD mode, i.e., the same frequency domain resource can be used only for UL or DL at the same moment. In order to use frequency domain resources more flexibly and improve resource utilization, the TDD system can also work in a full-duplex (FD) mode, e.g., the same frequency domain resource is used for both UL and DL at the same moment, that is, uplink data and downlink data are processed on the same frequency domain resources at the same time.

In the TDD system, a frame structure may be divided into DL slots, UL slots sand flexible slots, once a frame structure is determined, a UE may send and receive data according to the frame structure. For a UE using the half-duplex (HD) mode, a base station (e.g., gNB, etc.) schedules the UE to send or receive according to the frame structure. For a UE using the FD mode, the base station schedules the UE to send, receive or both send and receive according to the frame structure. To sum up, the base station can configure the frame structure and notify the UE of the frame structure, so that the UE is informed of the frame structure and can correctly send and receive data. From another point of view, after the UE is informed of the frame structure, it can be informed of possible inter-UE interference, thus adopting interference cancellation technology to mitigate the interference and improve communication reliability.

In an example, in the TDD system, for a frame structure mainly for the uplink transmission, usually more UL slots are configured, which results in fewer DL slots, so that a downlink transmission rate is limited and transmission delay of downlink data is increased, resulting in larger downlink transmission delay and unfavourable to downlink services.

In an example of the present disclosure, a CSI-RS transmission method is proposed, in which flexible downlink frequency domain resources and uplink frequency domain resources are configured for UE through SBFD time-frequency resources. Uplink data can be transmitted by using uplink frequency domain resources. That is, uplink frequency domain resources may be configured in downlink slots or flexible slots, and uplink data can be transmitted through uplink frequency domain resources, so that the uplink transmission rate can be improved and the transmission delay of uplink data can be reduced. In addition, downlink frequency domain resources may be configured in uplink slots or flexible slots, and downlink data can be transmitted by using downlink frequency domain resources, so that downlink transmission rate can be improved and transmission delay of downlink data can be reduced.

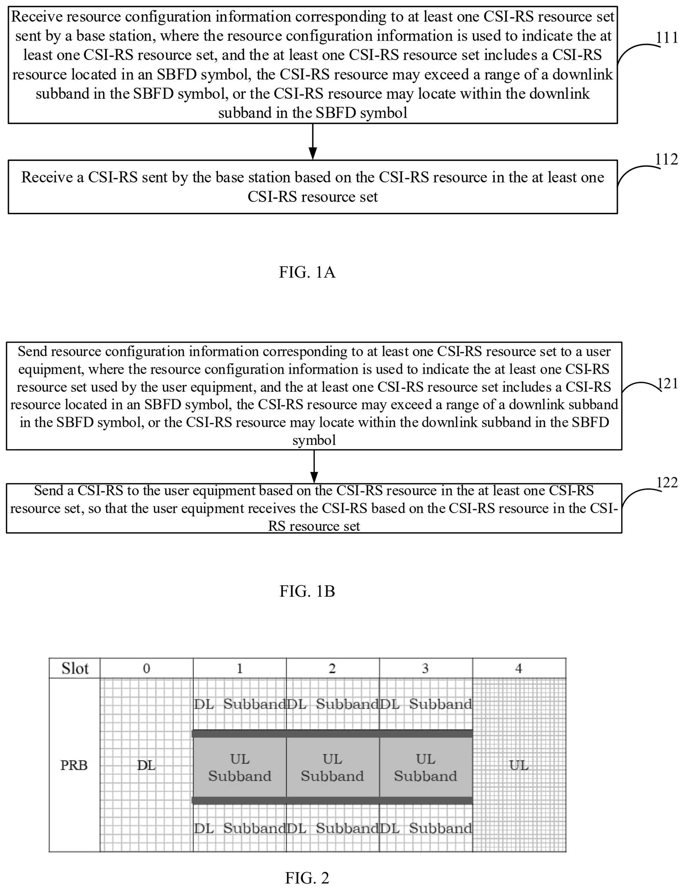

An example of the present disclosure provides a CSI-RS transmission method, which can be performed by a user equipment. A schematic flowchart of a CSI-RS transmission method is shown in FIG. 1A, and the method may include step 111 and step 112.

At step 111, resource configuration information corresponding to at least one CSI-RS resource set sent by a base station is received, where the resource configuration information is used to indicate the at least one CSI-RS resource set, and the at least one CSI-RS resource set includes a CSI-RS resource located in an SBFD symbol, the CSI-RS resource may exceed a range of a downlink subband in the SBFD symbol, or the CSI-RS resource may locate within the downlink subband in the SBFD symbol.

At step 112, a CSI-RS sent by the base station is received based on the CSI-RS resource in the at least one CSI-RS resource set.

An example of the present disclosure provides a CSI-RS transmission method, which can be performed by a base station. A schematic flowchart of a CSI-RS transmission method is shown in FIG. 1B, and the method may include step 121 and step 122.

At step 121, resource configuration information corresponding to at least one CSI-RS resource set is sent to a user equipment, where the resource configuration information is used to indicate the at least one CSI-RS resource set used by the user equipment, and the at least one CSI-RS resource set includes a CSI-RS resource located in an SBFD symbol, the CSI-RS resource may exceed a range of a downlink subband in the SBFD symbol, or the CSI-RS resource may locate within the downlink subband in the SBFD symbol.

At step 122, a CSI-RS is sent to the user equipment based on the CSI-RS resource in the at least one CSI-RS resource set, so that the user equipment receives the CSI-RS based on the CSI-RS resource in the CSI-RS resource set.

In an example, the CSI-RS resource is a CSI-RS time-frequency resource, and the CSI-RS resource is taken as an example in the following.

In an example, if the user equipment corresponds to a first CSI-RS resource set, the base station sends first resource configuration information corresponding to the first CSI-RS resource set to the user equipment, and the first resource configuration information is used to indicate the first CSI-RS resource set. The first CSI-RS resource set may include a first type of CSI-RS resource located in a common symbol and a second type of CSI-RS resource located in the SBFD symbol, and the second type of CSI-RS resource exceeds the range of the downlink subband in the SBFD symbol. The second type of CSI-RS resource exceeds the range of the downlink subband in the SBFD symbol, which means that: the second type of CSI-RS resource includes a first partial resource located in the downlink subband in the SBFD symbol and a second partial resource located in an uplink subband or a guard subband in the SBFD symbol.

In an example, if the user equipment corresponds to a second CSI-RS resource set and a third CSI-RS resource set, the base station sends the user equipment second resource configuration information corresponding to the second CSI-RS resource set and third resource configuration information corresponding to the third CSI-RS resource set, where the second resource configuration information is used to indicate the second CSI-RS resource set and the third resource configuration information is used to indicate the third CSI-RS resource set. The second CSI-RS resource set may include a third type of CSI-RS resource located in the SBFD symbol, which is located in the downlink subband in the SBFD symbol, that is, the third type of CSI-RS resource does not exceed the range of the downlink subband in the SBFD symbol, and the third CSI-RS resource set includes a fourth type of CSI-RS resource located in the common symbol.

In an example, if the second type of CSI-RS resource includes the first partial resource located in the downlink subband in the SBFD symbol and the second partial resource located in the uplink subband or the guard subband in the SBFD symbol, and if downlink data is allowed to be transmitted outside the downlink subband in the SBFD symbol, the base station sends the CSI-RS to the user equipment based on the first partial resource and the second partial resource of the second type of CSI-RS resource. The user equipment receives the CSI-RS sent by the base station based on the first partial resource and the second partial resource of the second type of CSI-RS resource.

Or, if downlink data is not allowed to be transmitted outside the downlink subband in the SBFD symbol, the base station prohibits sending the CSI-RS to the user equipment based on the first partial resource and the second partial resource of the second type of CSI-RS resource. The user equipment prohibits receiving the CSI-RS sent by the base station based on the first partial resource and the second partial resource of the second type of CSI-RS resource. Or, the base station sends the CSI-RS based on the first partial resource of the second type of CSI-RS resource and prohibits sending the CSI-RS based on the second partial resource of the second type of CSI-RS resource. The user equipment receives the CSI-RS based on the first partial resource of the second type of CSI-RS resource, and prohibits receiving the CSI-RS based on the second partial resource of the second type of CSI-RS resource.

In an example, after the user equipment receives the CSI-RS based on the first partial resource of the second type of CSI-RS resource, and prohibits receiving the CSI-RS based on the second partial resource of the second type of CSI-RS resource, the user equipment may further obtain first channel state information by measuring the CSI-RS received at the first partial resource of the second type of CSI-RS resource, and send the first channel state information to the base station.

In an example, after the user equipment prohibits receiving the CSI-RS based on the first partial resource and the second partial resource of the second type of CSI-RS resource, the user equipment may further perform measurement based on a CSI-RS that does not overlap with the uplink subband or the guard subband in a previous period, determine a measurement result as channel state information at a current period, and send the channel state information to the base station.

In an example, after the user equipment receives the CSI-RS sent by the base station based on the first type of CSI-RS resource in the first CSI-RS resource set, it may further obtain second channel state information by measuring the CSI-RS received at the first type of CSI-RS resource, and send the second channel state information to the base station.

Sending the first channel state information to the base station and sending the second channel state information to the base station includes: if the first channel state information includes pieces of first L1-RSRP and the second channel state information includes pieces of second L1-RSRP, selecting N pieces of first L1-RSRP from the pieces of first L1-RSRP and selecting N pieces of second L1-RSRP from the pieces of second L1-RSRP, and sending the N pieces of first L1-RSRP and the N pieces of second L1-RSRP to the base station; or, selecting 2N pieces of L1-RSRP from the pieces of first L1-RSRP and the pieces of second L1-RSRP, and sending the 2N pieces of L1-RSRP to the base station.

And/or, if the first channel state information includes a plurality of first L1-SINRs and the second channel state information includes a plurality of second L1-SINRs, N first L1-SINRs are selected from the plurality of first L1-SINRs and N second L1-SINRs are selected from the plurality of second L1-SINRs, and the N first L1- SINRs and the N second L1-SINRs are sent to the base station; or, 2N L1-SINRs are selected from the plurality of first L1-SINRs and the plurality of second L1-SINRs, and the 2N L1-SINRs are sent to the base station.

In an example, the user equipment obtains first channel state information by measuring the CSI-RS received at the first partial resource of the second type of CSI-RS resource, which may include: if the first partial resource of the second type of CSI-RS resource corresponds to at least one CSI subband, for each CSI subband, if the CSI subband completely overlaps with the uplink subband or the guard subband in the SBFD symbol, prohibiting measuring a CSI-RS received at the CSI subband.

If the CSI subband does not overlap with the uplink subband or the guard subband in the SBFD symbol, obtain a measurement result of the CSI subband by measuring the CSI-RS received at the CSI subband.

If the CSI subband partially overlaps with the uplink subband or the guard subband in the SBFD symbol, prohibit measuring the CSI-RS received at the CSI subband; or, determine whether to measure the CSI-RS received at the CSI subband according to a size of a non-overlapping resource of the CSI subband, if so, obtain the measurement result of the CSI subband by measuring the CSI-RS received at the CSI subband, if not, prohibit measuring the CSI-RS received at the CSI subband.

Determine the first channel state information based on the measurement result of each CSI subband.

In an example, the base station may send first indication information to the user equipment, and the user equipment receives the first indication information. The first indication information is used to indicate to prohibit transmitting the CSI-RS based on the first partial resource and the second partial resource of the second type of CSI-RS resource; or, indicate to transmit the CSI-RS based on the first partial resource of the second type of CSI-RS resource, and to prohibit transmitting the CSI-RS based on the second partial resource of the second type of CSI-RS resource.

If the first indication information is used to indicate to transmit the CSI-RS based on the first partial resource of the second type of CSI-RS resource, and prohibit transmitting the CSI-RS resource based on the second partial resource of the second type of CSI-RS resource, the base station may further send second indication information to the user equipment, and the user equipment receives the second indication information. The second indication information is used to indicate to prohibit measuring the CSI-RS received at a CSI subband overlapping with the uplink subband or the guard subband, or indicate whether to measure the CSI-RS received at a CSI subband according to a size of a non-overlapping resource of the CSI subband.

In an example, after the user equipment receives the CSI-RS sent by the base station based on the first type of CSI-RS resource, the user equipment may further obtain second channel state information by measuring the CSI-RS received at the first type of CSI-RS resource, and send the second channel state information to the base station, where the first channel state information and the second channel state information are sent to the base station through different uplink resources; or, the first channel state information and the second channel state information are sent to the base station through a same uplink resource.

In an example, for the base station and the user equipment, the third type of CSI-RS resource only includes a resource located in the downlink subband in the SBFD symbol; where, if the third type of CSI-RS resource only occupies continuous resources of the downlink subband, the second resource configuration information includes an RB starting position and a number of occupied RBs corresponding to the continuous resources; and if the third type of CSI-RS resource occupies two discontinuous resources in the downlink subband, the second resource configuration information includes RB starting positions and numbers of occupied RBs corresponding to the two resources, respectively.

The RB starting position corresponding to the third type of CSI-RS resource may be an integer multiple of a first value (such as 4), and the number of occupied RBs corresponding to the third type of CSI-RS resource is greater than or equal to a second value (such as 24), and the number of occupied RBs corresponding to the third type of CSI-RS resource is an integer multiple of the first value.

Or, the RB starting position corresponding to the third type of CSI-RS resource can be a starting position of the downlink subband in the SBFD symbol, and the number of occupied RBs corresponding to the third type of CSI-RS resource can be any value.

If a capability parameter of the user equipment indicates that the user equipment has a capability to support any position as the RB starting position, the RB starting position corresponding to the third type of CSI-RS resource is the starting position of the downlink subband in the SBFD symbol, and the number of occupied RBs corresponding to the third type of CSI-RS resource is any value. If the capability parameter of the user equipment indicates that the user equipment does not have the capability to support any position as the RB starting position, the RB starting position corresponding to the third type of CSI-RS resource is an integer multiple of the first value, and the number of occupied RBs corresponding to the third type of CSI-RS resource is greater than or equal to the second value, and the number of occupied RBs corresponding to the third type of CSI-RS resource is an integer multiple of the first value.

In an example, the base station may send third indication information to the user equipment, and the user equipment receives the third indication information. The third indication information is used to indicate that the downlink data is allowed to be transmitted outside the downlink subband in the SBFD symbol, or is used to indicate that downlink data is not allowed to be transmitted outside the downlink subband in the SBFD symbol.

And/or, the base station may send fourth indication information to the user equipment, and the user equipment receives the fourth indication information. The fourth indication information is used to indicate that uplink data is allowed to be transmitted outside the uplink subband in the SBFD symbol, or is used to indicate that the uplink data is not allowed to be transmitted outside the uplink subband in the SBFD symbol.

The base station sends the CSI-RS based on the first partial resource of the second type of CSI-RS resource, and prohibits sending the CSI-RS based on the second partial resource of the second type of CSI-RS resource, which may include that: determine target transmission power based on maximum transmission power of the second type of CSI-RS resource; or, determine the target transmission power based on the maximum transmission power and a resource ratio of the second type of CSI-RS resource, where the resource ratio is a resource ratio of the first partial resource to the second type of CSI-RS resource; and send the CSI-RS based on the first partial resource at the target transmission power.

It can be seen from the above technical solution that UE receives the CSI-RS by using CSI-RS resource(s) in the CSI-RS resource set(s), and the base station transmits CSI-RS by using CSI-RS resource(s) in the CSI-RS resource set(s). Under the condition that an SBFD time-frequency resource overlaps with a CSI-RS resource, the SBFD time-frequency resource may be used for CSI-RS transmission, which improves downlink data transmission reliability and cell coverage radius, reduces uplink and downlink interference caused by SBFD time-frequency resource, so that SBFD time-frequency resource allocation and CSI-RS transmission mechanism can be effectively combined and implemented. From the perspective of a whole system, it can support CSI-RS transmission of a TDD system, improve resource utilization, improve network coverage and network capacity, increase downlink transmission resources, reduce downlink transmission delay and increase downlink transmission capacity.

The above technical solutions of the present disclosure are described below in connection with examples.

In the TDD system, a frame structure may be divided into UL slots, DL slots and flexible slots. Symbols in the flexible slot can be configured as UL symbols, DL symbols and F symbols, and F symbols can be used for UL, DL or GP. Uplink data can be transmitted in a UL slot, a UL symbol or an F symbol in a flexible slot, and the uplink data cannot be transmitted in a DL slot or a DL symbol in the flexible slot. Similarly, downlink data can be transmitted in the DL slot, the DL symbol or the F symbol in the flexible slot, and the downlink data cannot be transmitted in the UL slot or the UL symbol in the flexible slot.

A full-duplex communication can be realized by SBFD, that is, SBFD time-frequency resources can be configured in time-frequency resources (such as UL slots, DL slots and flexible slots), so that data in different directions from other time-frequency resources can be transmitted on the SBFD time-frequency resources at the same moment. For example, an SBFD time-frequency resource can be configured in a DL slot, and uplink data can be transmitted through the SBFD time-frequency resource, so that the uplink data can be transmitted in the DL slot. For another example, an SBFD time-frequency resource can be configured in a DL symbol of a flexible slot, and uplink data can be transmitted through the SBFD time-frequency resource, so that the uplink data can be transmitted in the DL symbol of the flexible slot. For another example, an SBFD time-frequency resource can be configured in a UL slot, and downlink data is transmitted through the SBFD time-frequency resource, so that the downlink data is transmitted in the UL slot. For another example, an SBFD time-frequency resource can be configured in a UL symbol of a flexible slot, and downlink data can be transmitted through the SBFD time-frequency resource, so that downlink data can be transmitted in the UL symbol of the flexible slot.

In an example, the SBFD time-frequency resource (SBFD time-frequency resource can also be called Subband time-frequency resource) can be a time-frequency resource in an SBFD slot or in an SBFD symbol, and the SBFD symbol can be defined as a symbol configured with SBFD subbands for the base station and the UE, and on the SBFD subbands of these SBFD symbols (called SBFD time-frequency resources), the base station and the UE can perform full-duplex communication, i.e., on the SBFD time-frequency resources, uplink transmissions, downlink transmissions, or simultaneous uplink and downlink transmissions can be performed.

An SBFD time-frequency resource can be clearly indicated as uplink, downlink or Flexible. When an SBFD time-frequency resource is indicated as Flexible, uplink or downlink can be flexibly scheduled in the SBFD time-frequency resource. If the SBFD time-frequency resource is not clearly indicated, it means it is Flexible, and can be used to transmit uplink or downlink data. Configurations of SBFD symbols can include: which symbols in DL slots, UL slots and F slots can be used for SBFD transmission, as well as the period and start point of the implementation. For convenience of description, in the following embodiments, the SBFD time-frequency resource is taken as a time-frequency resource corresponding to an SBFD slot as an example.

In an example, SBFD indicated as uplink is called UL-SBFD, that is, the SBFD time-frequency resource is used for uplink, and SBFD indicated as downlink is called DL-SBFD, that is, the SBFD time-frequency resource is used for downlink. In order to support the FD communication, the SBFD time-frequency resource can be configured semi-persistently such as through radio resource control (RRC) signalling, and the SBFD time-frequency resource can also be dynamically configured, such as through downlink control information (DCI).

The SBFD time-frequency resource can be configured in a DL symbol, an F symbol and a UL symbol. A symbol configured with an SBFD time-frequency resource is called an SBFD symbol, and the other symbols without SBFD time-frequency resource are called common symbols, that is, non-SBFD symbols are called common symbols, such as a UL symbol, a DL symbol and an F symbol. SBFD can be configured in some symbols of a certain slot, that is, some symbols of a slot are SBFD symbols, and the rest are common symbols, so that transmission of DL or UL data may cross the common symbols or the SBFD symbols. A slot configured with an SBFD time-frequency resource (such as a UL slot, a DL slot and a flexible slot) can be called an SBFD slot, and a symbol configured with an SBFD time-frequency resource can be called an SBFD symbol.

In an example, a CSI-RS is a kind of reference signal, which is used for time/frequency tracking, channel state information (CSI) calculation, layer 1 reference signal receiving power (L1-RSRP) calculation and layer 1 signal-interference-noise ratio (L1-SINR) calculation and mobility management, and multiple input multiple output (MIMO), beamforming and other technologies are all based on the CSI-RS.

The CSI is a general term for the information reflecting channel states measured by UE according to the CSI-RS, which may include but not limited to, a channel quality indicator (CQI), a precoder matrix indicator (PMI), a layer indicator (LI), a rank indicator (RI), L1-RSRP, an L1-SINR, etc. The base station can select an appropriate scheduling strategy and transmission scheme according to the CSI fed back by the UE, so as to improve an overall performance of a communication system.

The CSI-RS is used for time/frequency tracking, CSI measurement, beam thinning and management, interference measurement, mobility management and other functions, and its parameters are configured through high-level signalling. For a CSI-RS used for time/frequency tracking, in frequency range (FR) 1, main characteristics of the CSI-RS are as follows. It is an NZP-CSI-RS-ResourceSet composed of four periodic non zero power CSI-RS (nzp-CSI-RS) resources, and this resource set will be configured with parameter trs-Info. These four CSI-RS resources are distributed in two consecutive slots, two CSI-RS resources are mapped in each slot, and a time domain interval is fixed by four symbols (e.g., $l \in \{4,8\}$, $l \in \{5,9\}$, or $l \in \{6,10\}$ for frequency range 1). Each CSI-RS resource is for 1 port and frequency domain density is 3, that is, one resource block (RB) occupies 3 resource elements (REs). The bandwidth is min{52, BWP size} or equal to the bandwidth part (BWP) size.

In FR2, main characteristics of the CSI-RS are as follows. It is an NZP-CSI-RS-ResourceSet composed of two periodic nzp-CSI-RS resources, the two periodic nzp-CSI-RS resources are distributed in one slot, or it is an NZP-CSI-RS-ResourceSet composed of four periodic nzp-CSI-RS resources, these four periodic nzp-CSI-RS resources are distributed in 2 consecutive slots. Each slot maps two CSI-RS resources and the time domain interval is fixed for 4 symbols (e.g., $l\in\{0,4\}$, $l\in\{1,5\}$, or $l\in\{2,6\}$, $l\in\{3,7\}$, $l\in\{7,11\}$, $l\in\{8,12\}$, or $l\in\{9,13\}$ for frequency range 2). Each CSI-RS resource is for 1 port and frequency domain density is 3. The bandwidth is min{52, BWP size} or equal to the BWP size.

For CSI-RS resource used for CSI measurement, beam thinning and management, mobility management, interference measurement and other functions, its main characteristics are as follows. In the time domain, it can be configured to use a maximum of 4 symbols, and its position in a slot can be arbitrary, and it can be configured to be periodic, aperiodic or semi-persistent. For aperiodic and semi-persistent CSI-RSs, activation occurs via MAC CE or DCI. In the frequency domain, minimum occupancy is 24 physical resource blocks (PRBs), and the maximum is configured to a size of BWP, whose density in the frequency domain can be configured to the values of 0.5, 1, 3, etc. The number of ports per CSI-RS resource is configured as 1, 2, 4, 8, 16, or 32 depending on the usage.

For CSI-RS resources used for CSI measurement, beam refinement and management, mobility management, interference measurement and other functions, UE will measure CSI-RS(s) to obtain a CSI result, and report the CSI result to the base station in uplink control information (UCI) for the overall scheduling of the base station. Each CSI reporting may correspond to a particular CSI-RS resource, and the content of the CSI report can include, but is not limited to: a CSI-RS resource indicator, a rank indicator, a layer indicator, a CQI, a PMI, L1-RSRP, an L1-SINR, etc., with each reporting varying according to usage and high-level signalling configuration. Types of CSI reporting can be configured as periodic, aperiodic and semi-persistent, and aperiodic and semi-persistent CSI reporting can be triggered by DCI.

In an example, the base station sends CSI-RS(s) to the UE, and the UE sends CSI to the base station. Aiming at a transmission process of CSI-RS and CSI, a CSI-RS resource scheduling method and a CSI reporting method are proposed in the full-duplex mode of TDD. When transmitting the CSI-RS at the SBFD time-frequency resource, it is processed according to the overlapping of a CSI-RS resource with an uplink Subband (UL Subband), and an appropriate transmission strategy is selected for transmitting CSI-RS in a corresponding time-frequency resource. Due to different configurations of different types of CSI-RS resources, different transmission strategies can be selected for different types of CSI-RS resources, and corresponding CSI reporting methods are given for different transmission strategies. By providing a CSI reporting method for SBFD time-frequency resource, a CSI-RS transmission strategy can be adapted, and a power control method of CSI-RS in SBFD time-frequency resource is provided. By specifying the CSI-RS transmission strategy in the SBFD time-frequency resource, the CSI reporting method, and the power control method of CSI-RS, the SBFD time-frequency resource can realize uplink and downlink transmission more efficiently and improve the overall performance of the communication system.

First, data transmission control for SBFD symbols.

For a half-duplex UE supporting SBFD function, the UE can know the configuration of SBFD time-frequency resources, but the UE can only receive DL data or send UL data at the same moment (symbol).

The base station configures SBFD time-frequency resources for the half-duplex UE supporting SBFD function. The UE is configured with an SBFD time-frequency resource in a DL slot or a DL symbol, and the SBFD time-frequency resource may be used to transmit UL data, that is, the SBFD time-frequency resource includes a UL Subband, the DL symbol configured with SBFD time-frequency resource is an SBFD symbol, and in the SBFD symbol, in addition to the UL Subband, a DL Subband and a guard bandwidth (also known as a guard subband) are used, the guard bandwidth is located between the UL Subband and the DL Subband.

The UE is configured with an SBFD time-frequency resource in a UL slot or a UL symbol, and the SBFD time-frequency resource may be used to transmit DL data, that is, the SBFD time-frequency resource includes a DL Subband, the UL symbol configured with SBFD time-frequency resource is an SBFD symbol, and in the SBFD symbol, in addition to the DL Subband, there are a UL Subband and a guard bandwidth. The UE is configured with an SBFD time-frequency resource in an F symbol, and the SBFD time-frequency resource is used to transmit DL data (or UL data), that is, the SBFD time-frequency resource includes a DL Subband (or a UL Subband), the F symbol configured with the SBFD time-frequency resource is an SBFD symbol, and in the SBFD symbol, in addition to the DL Subband (or the UL Subband), there are a UL Subband and a guard bandwidth (or a DL Subband and a guard bandwidth).

Referring to FIG. 2, a schematic diagram of SBFD time-frequency resources is shown, where the base station configures an SBFD time-frequency resource for the UE in a DL slot or DL symbol, the SBFD time-frequency resource includes a UL Subband, and outside of the UL Subband is DL Subbands, and a black portion between the UL Subband and a DL Subband is a guard bandwidth.

The base station can semi-persistently configure SBFD time-frequency resources or dynamically configure SBFD time-frequency resources, such as semi-persistently configuring SBFD time-frequency resources through TDD-UL-DL-ConfigCommon signalling (TDD uplink and downlink shared configuration) or TDD-UL-DL-ConfigDedicated signalling (TDD uplink and downlink dedicated configuration), or dynamically configuring SBFD time-frequency resources through DCI.

For a half-duplex UE that does not support the SBFD function, since the configurations related to the SBFD time-frequency resource cannot be known, the UE may normally receive a CSI-RS in an SBFD time-frequency resource (UL Subband) if the SBFD time-frequency resource (UL Subband) is configured for a DL slot or a DL symbol.

For a half-duplex UE supporting SBFD function, since the UE can know the configurations related to the SBFD time-frequency resource, in order for the UE to receive the CSI-RS in the SBFD time-frequency resource correctly, it is necessary to make clear whether it can transmit DL data outside a DL Subband (e.g., the SBFD time-frequency resource as the DL Subband), that is, whether it can transmit DL data in a UL Subband or a guard bandwidth. For example, it is not allowed to transmit DL data outside a DL Subband, that is, the DL data is only transmitted in the DL Subband. Or, it is allowed to transmit DL data outside the DL Subband, that is, the DL data can be transmitted in a UL Subband and/or a guard bandwidth.

For which solution is used, this can be indicated by an indicator bit. For example, the base station may send third indication information (such as a 1-bit indication bit) to the UE, and the third indication information is used to indicate that transmission of DL data outside the DL Subband in the SBFD symbol is allowed, or indicate that transmission of DL data outside the DL Subband in the SBFD symbol is not allowed. For example, when configuring the SBFD time-frequency resource (e.g., a DL Subband), the base station can introduce an additional parameter: dlReceptionOutDlSubband ENUMERATED {enabled}, Optional. This parameter is optional. If this parameter is not configured, the second solution will be used by default, that is, the transmission of DL data outside the DL Subband will not be allowed. If this parameter is configured, the first solution will be used, that is, the transmission of DL data outside the DL Subband will be allowed.

For a half-duplex UE supporting SBFD function, since the UE can know the configurations related to the SBFD time-frequency resource, in order for the UE to receive the CSI-RS in the SBFD time-frequency resource correctly, it is necessary to make clear whether it can transmit UL data outside a UL Subband (e.g., the SBFD time-frequency resource as the UL Subband), that is, whether it can transmit the UL data in a DL Subband or a guard bandwidth. For example, it is not allowed to transmit UL data outside a UL Subband, that is, the UL data is only transmitted in the UL Subband. Or, it is allowed to transmit the UL data outside the UL Subband, that is, the UL data can be transmitted in a DL Subband and/or a guard bandwidth.

For which solution is used, this can be indicated by an indicator bit. For example, the base station may send fourth indication information (such as a 1-bit indication bit) to the UE, and the fourth indication information is used to indicate that transmission of UL data outside the UL Subband in the SBFD symbol is allowed, or indicate that transmission of UL data outside the UL Subband in the SBFD symbol is not allowed. For example, when configuring the SBFD time-frequency resource (e.g., a UL Subband), the base station can introduce an additional parameter: ulTransmissionOutUlSubband ENUMERATED {enabled}, Optional. This parameter is optional. If this parameter is not configured, the second solution will be used, that is, the transmission of UL data outside the UL Subband will not be allowed. If this parameter is configured, the first solution will be used, that is, the transmission of UL data outside the UL Subband will be allowed.

No matter whether the first solution or the second solution is used, for a UE working in half-duplex mode and supporting SBFD function, only DL data can be received or only UL data can be sent in the same symbol. When there will be both DL data reception and UL data transmission in the same symbol, the UE needs to clarify a conflict resolution solution at this time, which can refer to subsequent embodiments. The UE in subsequent embodiments refers to the half-duplex UE supporting SBFD function.

Second, CSI-RS resource configuration.

For the same UE, when both a CSI-RS and UL data may exist at a certain moment, it is necessary to compare priorities of CSI-RS and UL data. If the priority of CSI-RS is higher than that of UL data, the UE receives the CSI-RS, and if the priority of CSI-RS is lower than that of UL data, the UE gives up receiving the CSI-RS.

For example, for a dynamically scheduled UL data transmission, such as a physical uplink shared channel (PUSCH), the base station should try to avoid dynamically scheduling the PUSCH on symbols carrying a CSI-RS. If it is necessary to dynamically schedule the PUSCH, the priority of PUSCH is higher than that of CSI-RS, so the UE gives up receiving the CSI-RS. For the semi-persistent scheduling PUSCH, the priority of PUSCH is higher than that of CSI-RS, so UE gives up receiving the CSI-RS.

When there is a conflict between an SRS and a CSI-RS at the same moment, it needs to be judged according to the type: Aperiodic has a higher priority than Semi-persistent, and Semi-persistent has a higher priority than Periodic. For example, the priority of SRS scheduled by Aperiodic is higher than that of CSI-RS scheduled by Periodic or Semi-persistent, and the priority of CSI-RS scheduled by Aperiodic is higher than that of SRS scheduled by Periodic or Semi-persistent. For the same type, the UE does not expect the base station to activate the CSI-RS and SRS of Semi-persistent and/or Aperiodic in the same symbol at the same time. For the CSI-RS and SRS scheduled by Periodic, the CSI-RS has a higher priority.

In an example, taking the priority of CSI-RS higher than that of UL data as an example, it is assumed that when UE receives a CSI-RS, the conflict resolution for the CSI-RS has been carried out, and the UE can receive the CSI-RS correctly.

In an example, when configuring a CSI-RS resource in an SBFD symbol, a unified configuration manner of the CSI-RS resource and/or a separate configuration manner of the CSI-RS resource can be adopted. The unified configuration manner of the CSI-RS resource and the separate configuration manner of the CSI-RS resource will be described below.

For the unified configuration manner of the CSI-RS resource, the CSI-RS resource in the SBFD symbol shares the same configuration with a CSI-RS resource in a common symbol (i.e., non-SBFD symbol), i.e., the configurations of the CSI-RS resource in the SBFD symbol and the CSI-RS resource in the common symbol are issued through the same resource configuration information.

For the separate configuration manner of the CSI-RS resource, the CSI-RS resource in the SBFD symbol and the CSI-RS resource in the common symbol use different configurations, i.e., the configuration of CSI-RS resource in the SBFD symbol is issued through one resource configuration information, and the configuration of CSI-RS resource in the common symbol is issued through another resource configuration information.

Obviously, in the separate configuration manner, the CSI-RS resource can be configured separately in the SBFD symbol for UE, and the CSI-RS resource can be configured according to the SBFD time-frequency resource.

In an example, the unified configuration manner of the CSI-RS resource can be adopted, or the separate configuration manner of the CSI-RS resource can be adopted, and the above two manners can coexist. For example, if the base station does not consider the configurations of SBFD time-frequency resources separately and only configures one CSI-RS resource set, it needs to find a transmission mechanism when the unified CSI-RS and a UL Subband overlap. If the base station considers the configurations of SBFD time-frequency resource and configures one CSI-RS resource set in the DL Subband, the configuration will coexist with the unified CSI-RS resource configuration.

Third, the unified configuration of the CSI-RS resources and CSI reporting.

In the unified configuration manner of the CSI-RS resource, the CSI-RS resource in the SBFD symbol shares the same configuration with the CSI-RS resource in the common symbol, such that the CSI-RS resources in the CSI-RS resource set may span common symbols and SBFD symbols in a same slot, or, different CSI-RS resources in the CSI-RS resource set may be in common symbols or SBFD symbols, or, CSI-RS resources in the CSI-RS resource set will be in common symbols or SBFD symbols at different periods, so that CSI-RS resources may overlap with a UL Subband or a guard bandwidth.

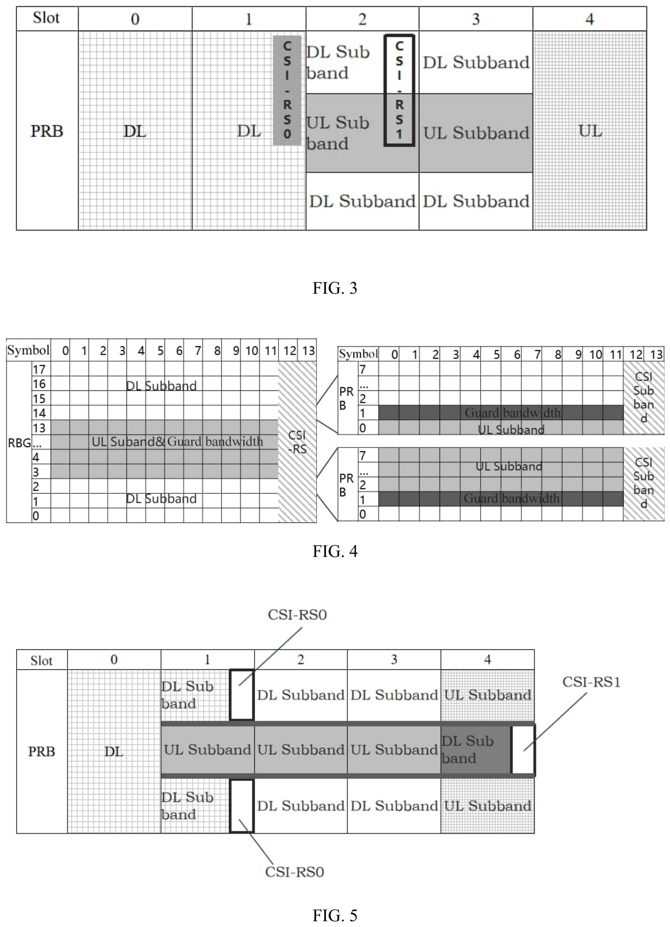

Referring to FIG. 3, a schematic diagram of configuring a CSI-RS resource set (denoted as a first CSI-RS resource set) for SBFD symbols and common symbols is shown. The first CSI-RS resource set can include a first type of CSI-RS resource located in a common symbol (such as CSI-RS0), the first CSI-RS resource set can include a second type of CSI-RS resource located in an SBFD symbol (such as CSI-RS1), and the second type of CSI-RS resource exceeds a range of a DL Subband in the SBFD symbol, that is, the second type of CSI-RS resource overlaps with a UL Subband or a guard bandwidth.

The base station can allocate a first CSI-RS resource set to the UE, and the first CSI-RS resource set can include at least one first type of CSI-RS resource and/or at least one second type of CSI-RS resource.

The base station sends first resource configuration information corresponding to the first CSI-RS resource set to the UE, and the UE determines the first CSI-RS resource set based on the first resource configuration information after receiving the first resource configuration information. The first resource configuration information may be dynamic resource configuration information or semi-persistent resource configuration information. The base station may send CSI-RS(s) to the UE based on the first type of CSI-RS resource and/or second type of CSI-RS resource in the first CSI-RS resource set, and the UE may receive the CSI-RS(s) based on the first type of CSI-RS resource and/or second type of CSI-RS resource in the first CSI-RS resource set. The UE can further measure the received CSI-RS(s) to obtain CSI, and send the CSI to the base station.

In an example, for each first type of CSI-RS resource in the first CSI-RS resource set, since the first type of CSI-RS resource is located in a common symbol, the base station can send a CSI-RS based on the first type of CSI-RS resource to the UE. The UE can receive the CSI-RS based on the first type of CSI-RS resource and measure the CSI-RS received at the first type of CSI-RS resource to obtain CSI, which is later recorded as second channel state information, and send the second channel state information to the base station.

In an example, for each second type of CSI-RS resource in the first CSI-RS resource set, the second type of CSI-RS resource is located in an SBFD symbol, and the second type of CSI-RS resource includes a first partial resource located in a DL Subband resource of the SBFD symbol, a second partial resource located in a UL Subband or a guard Subband in the SBFD symbol. Based on this:

if downlink data is allowed to be transmitted outside the DL Subband in the SBFD symbol, the base station sends a CSI-RS to the UE based on the first partial resource and the second partial resource, and the UE receives the CSI-RS based on the first partial resource and the second partial resource, measures the received CSI-RS to obtain channel state information (e.g., a measurement result) and sends the channel state information to the base station.

If downlink data is not allowed to be transmitted outside the downlink subband in the SBFD symbol, the following manners can be adopted: Manner 1, the base station prohibits sending CSI-RS to the UE based on the first partial resource and second partial resource, and the UE prohibits receiving the CSI-RS based on the first partial resource and second partial resource.

In Manner 1, if the second type of CSI-RS resource exceeds the range of DL subband, the base station abandons sending the CSI-RS, and the UE no longer receives and measures the CSI-RS on the corresponding time-frequency resource.

For a periodic or semi-persistent CSI-RS, the UE can further measure a CSI-RS received in a previous period and not overlapping with the uplink subband or the guard subband, as channel state information associated with a current period, and send the channel state information to the base station. For example, UE measures a CSI-RS at a second type of CSI-RS resource that does not overlap with a UL Subband in the previous period, and reports a CSI result to the base station according to a current CSI reporting process, and RRC signalling is not configured with timeRestricionForChannelMeasurement.

Manner 2: the base station sends the CSI-RS to the UE based on the first partial resource, and prohibits sending the CSI-RS to the UE based on the second partial resource. The UE receives the CSI-RS based on the first partial resource, and prohibits receiving the CSI-RS based on the second partial resource. In Manner 2, the CSI-RS can only be sent within the DL Subband, and the part outside the DL Subband is discarded, and the UE receives a part of the CSI-RS in the DL Subband.

In an example, for a CSI-RS used for time-frequency tracking, if a size of the frequency domain resource used for transmitting the CSI-RS (i.e., the first partial resource) is greater than 52 PRBs, the UE utilizes the CSI-RS in the DL Subband for time and frequency offset tracking, and if the size of the frequency domain resource used for transmitting the CSI-RS is not greater than 52 PRBs, the UE does not utilize the CSI-RS in the DL Subband for the time and frequency offset tracking.

For a CSI-RS used for purposes other than time-frequency tracking, if the size of frequency domain resource used for transmitting the CSI-RS is greater than 24 PRBs, UE can measure the CSI-RS in the DL Subband and get a CSI result and report it to the base station; and if the size of frequency domain resource used for transmitting the CSI-RS is not greater than 24 PRBs, UE will not measure the CSI-RS in DL Subband.

In an example, after the UE receives the CSI-RS based on the first partial resource and prohibits receiving the resource based on the second partial resource, it may obtain first channel state information (i.e. a CSI measurement result) by measuring the CSI-RS received at the first partial resource, and send the first channel state information to the base station.

To sum up, the UE can obtain the first channel state information (a CSI measurement result corresponding to a CSI-RS received in the first partial resource of the second type of CSI-RS resource) and the second channel state information (a CSI measurement result corresponding to a CSI-RS received in the first type of CSI-RS resource). The UE can send the first channel state information and the second channel state information to the base station through different uplink resources, and the UE can also send the first channel state information and the second channel state information through the same uplink resource. For example, CSI reporting may be associated with a CSI-RS resource set. For a periodic or semi-persistent CSI-RS resource set that spans an SBFD symbol or a common symbol, the CSI can be reported in the following manners.

Manner A: configure different CSI reports for a periodic or semi-persistent CSI-RS resource of the SBFD symbol (i.e. the second type of CSI-RS resource) and a periodic or semi-persistent CSI-RS resource of the common symbol (i.e. the first type of CSI-RS resource). For example, CSI reporting needs to be associated with a CSI-RS resource in the CSI-RS resource set, that is, the CSI-RS resource that does not overlap with a UL Subband or a guard bandwidth (e.g., the first type of CSI-RS resource) and the CSI-RS resource that overlaps with the UL Subband or the guard bandwidth (e.g., the second type of CSI-RS resource) both have separate associated CSI reporting configurations.

To sum up, both the first type of CSI-RS resource and the second type of CSI-RS resource have separate associated CSI reporting configurations, so the UE sends the first channel state information corresponding to the second type of CSI-RS resource and the second channel state information corresponding to the first type of CSI-RS resource to the base station through different uplink resources.

Manner B: configure the periodic or semi-persistent CSI-RS resource of the SBFD symbol with the same CSI reporting configuration as the periodic or semi-persistent CSI-RS resources of the common symbol, that is, the first type of CSI-RS resource and the second type of CSI-RS resource correspond to the same CSI reporting configuration, so the UE can send the first channel state information corresponding to the second type of CSI-RS resource and the second channel state information corresponding to the first type of CSI-RS resource to the base station through the same uplink resource.

For Manner A and Manner B, the base station does not require special high-level signalling to notify UE. When configuring CSI reporting, it is sufficient to associate the CSI reporting with the corresponding CSI-RS resource.

In an example, in Manner 2, for wideband CSI reporting, the UE only measures the first channel state information according to all CSI-RSs in non-overlapping time-frequency resources (that is, the first partial resource of the second type of CSI-RS resource), and sends the first channel state information to the base station. The first channel state information may include but is not limited to at least one of the following: CQI, PMI, RI, LI, L1-RSRP or L1-SINR.

In an example, for a CSI-RS used for beam refinement and beam management, if there are a second type of CSI-RS resource that overlaps with the UL Subband or guard bandwidth and a first type of CSI-RS resource that does not overlap with the UL Subband or guard bandwidth, the reporting of L1-RSRP and/or L1-SINR can include the following.

If the first channel state information includes pieces of first L1-RSRP and the second channel state information includes pieces of second L1-RSRP, the UE may select N pieces of first L1-RSRP from the pieces of first L1-RSRP and select N pieces of second L1-RSRP from the pieces of second L1-RSRP, and sends the N pieces of first L1-RSRP and the N pieces of second L1-RSRP to the base station. And/or, if the first channel state information includes a plurality of first L1-SINRs and the second channel state information includes a plurality of second L1-SINRs, the UE may select N first L1-SINRs from the plurality of first L1-SINRs and select N second L1-SINRs from the plurality of second L1-SINRs, and send the N first L1- SINRs and the N second L1- SINRs to the base station.

For example, pieces of L1-RSRP and/or L1-SINRs in CSI can be divided into two groups, each group has N (only reporting L1-RSRP or L1-SINR) values or 2N (reporting L1-RSRP and L1-SINR) values, and the values of N are 1, 2, 3, etc., which is not limited. The contents of each group of CSI include a maximum L1-RSRP value, a second largest L1-RSRP value, ..., an Nth largest L1-RSRP value, and/or a maximum L1-SINR value, a second largest L1-SINR value, ..., an Nth largest L1-SINR value. The contents of the first group of CSI are derived from the non-overlapping first type of CSI-RS resource, that is, N pieces of second L1-RSRP and/or N second L1-SINRs are selected from the second channel state information. The contents of the second group of CSI are derived from the overlapped second type of CSI-RS resource, that is, N pieces of first L1-RSRP and/or N first L1-SINRs are selected from the first channel state information.

Arrange in the order of the contents of the first group of CSI and then the second group of CSI, or arrange in the order of the contents of the second group of CSI and then the first group of CSI. For example, an arrangement result is N pieces of second L1-RSRP, N second L1-SINRs, N pieces of first L1-RSRP and N first L1-SINRs.

Refer to Table 1 for an example of a structure of L1-RSRP and L1-SINR in CSI.

Table 1

| CSI reporting number | CSI domain |
|---|---|
| CSI report #N | Non-overlapping RSRP#1/SINR#1 |
| | Non-overlapping Differential RSRP#2/SINR#2 |
| | Overlapped RSRP#1/SINR#1 |
| | Overlapped Differential RSRP#2/SINR#2 |

If N is 2, non-overlapping RSRP#1/SINR#1 is a maximum L1-RSRP value/a maximum L1-SINR value in the second channel state information, non-overlapping RSRP#2/SINR#2 is a second largest L1-RSRP value/a second largest L1-SINR value in the second channel state information, and Differential RSRP#2/SINR#2 is a difference between the second largest L1-RSRP value and the maximum L1-RSRP value, and a difference between the second largest L1-SINR value and the maximum L1-SINR value. Overlapped RSRP#1/SINR#1 is a maximum L1-RSRP value /a maximum L1-SINR value in the first channel state information, and overlapped RSRP#2/SINR#2 is a second largest L1-RSRP value/a second largest L1-SINR value in the first channel state information.

If the first channel state information includes pieces of first L1-RSRP and the second channel state information includes pieces of second L1-RSRP, the UE may select 2N pieces of L1-RSRP from the pieces of first L1-RSRP and the pieces of second L1-RSRP, and sends the 2N pieces of L1-RSRP to the base station. And/or, if the first channel state information includes a plurality of first L1-SINRs and the second channel state information includes a plurality of second L1-SINRs, the UE may select 2N L1-SINRs from the plurality of first L1-SINRs and the plurality of second L1-SINRs and send the 2N L1-SINRs to the base station. For example, the contents of CSI include a maximum L1-RSRP value, a second largest L1-RSRP value, ..., a 2Nth largest L1-RSRP value, and/or a maximum L1-SINR value, a second largest L1-SINR value, ..., a 2Nth largest L1-SINR value. The contents of CSI may be derived from the non-overlapping first type of CSI-RS resource and the overlapping second type of CSI-RS resource, that is, selected from all channel state information.

In an example, the wideband CSI reporting can only report coarse-granularity CSI, in order to obtain finer CSI, Subband-based CSI reporting can be introduced, i.e., reporting CSI based on CSI Subbands (the CSI Subband is different from a Subband in SBFD), the base station can configure different CSI Subband sizes according to sizes of the BWP, as shown in Table 2, which is examples of CSI subband sizes. CSI reported based on CSI Subbands can be a PMI and/or a CQI, and there is no restriction on this.

Table 2

| BWP (PRBs) | CSI Subband size (PRBs) |
|---|---|
| 24-72 | 4, 8 |
| 73-144 | 8, 16 |
| 145-275 | 16, 32 |

In an example, if the first partial resource of the second type of CSI-RS resource corresponds to at least one CSI subband, for each CSI subband, if the CSI subband completely overlaps with the uplink subband or the guard subband in the SBFD symbol, prohibit measuring the CSI-RS received at the CSI subband. That is, the UE gives up reporting CSI related to a CSI subband which completely overlaps with the UL Subband and reports CSI associated with the non-overlapping CSI subband.

For each CSI subband, if the CSI subband does not overlap with the uplink subband or the guard subband in the SBFD symbol, obtain a measurement result (i.e. the first channel state information) of the CSI subband by measuring the CSI-RS received at the CSI subband, that is, the UE reports CSI associated with the non-overlapping CSI subband.

For each CSI subband, if the CSI subband partially overlaps with the uplink subband or the guard subband in the SBFD symbol, it is processed in the following manner. As shown in FIG. 4, it is a schematic diagram that a CSI subband misaligned with a UL subband. The sizes of resource block groups (RBGs) and CSI subbands are both 8 PRBs. In RBG 2 and RBG 14, there are cases that the UL Subband/guard subband misaligned with the CSI Subband, that is, the CSI subband partially overlaps with UL Subband or the guard subband.

Manner 2-1, prohibit measuring the CSI-RS received at the CSI subband, i.e., UE gives up reporting CSI related to the CSI subband that partially overlaps with a UL Subband and reports CSI related to the non-overlapping CSI subband.

Manner 2-2, determine whether to measure the CSI-RS received at the CSI subband according to a size of a non-overlapping resource of the CSI subband, if so, obtain the measurement result of the CSI subband by measuring the CSI-RS received in the CSI subband, if not, prohibit measuring the CSI-RS received in the CSI subband.

For example, a CSI subband may include non-overlapping resources and overlapping resources with a UL Subband/guard subband. If the size of non-overlapping resources is greater than or equal to half of the total resources of the CSI subband (this value can be configured, it can further be 2/3, 3/4, etc.), for example, if a size of the CSI subband is 8 PRBs, and if the size of the non-overlapping resources is greater than or equal to 4 PRBs, the CSI-RS received by CSI subband is measured (e.g., calculating the CSI based on the non-overlapping resources), otherwise, measuring the CSI-RS received in the CSI subband is not allowed.

To sum up, if the first partial resource of the second type of CSI-RS resource corresponds to at least one CSI subband, measurement result(s) of each CSI subband can be obtained, and the first channel state information can be determined based on the measurement result(s) of each CSI subband, for example, the first channel state information includes the measurement results of the CSI subbands.

In an example, for using Manner 1 or Manner 2, as well as Manner 2-1 or Manner 2-2 in Manner 2, the base station can configure through signalling (such as RRC signalling). For example, the base station sends the first indication information to the UE, the first indication information is used to indicate whether Manner 1 (prohibit transmitting a CSI-RS based on the first and second partial resource) or Manner 2 (transmit a CSI-RS based on the first partial resource and prohibit transmitting the CSI-RS based on the second partial resource) is adopted. When the first indication information indicates that Manner 2 is adopted, the base station can further send second indication information to the UE, and the second indication information is used to indicate that Manner 2-1 (prohibit measuring a CSI-RS received at a CSI subband) or Manner 2-2 (determine whether to measure the CSI-RS received at the CSI subband according to the size of non-overlapping resources of the CSI subband) is adopted.

For example, an example of RRC signalling sent by the base station can be as follows:

```
CSI-ReportConfig ::= SEQUENCE {

      …

csiReportUsingPartialCsirs ENUMERATED {enable}, optional,

csiReportUsingPartialCsiSubband ENUMERATED {enable}, optional,

…

}
```

If csiReportUsingPartialCsirs is configured, it may indicate that Manner 2 is adopted; and if this parameter is not configured, it may indicate that Manner 1 is adopted. csiReportUsingPartialCsiSubband can be configured only if Manner 2 is adopted. If this parameter is configured, it may indicate using Manner 2-2. If this parameter is not configured, it may indicate using Manner 2-1.

In an example, when reporting a Subband CQI and a Subband PMI, the Subband CQI and the Subband PMI are both measured and calculated by the UE using part of available CSI-RS resources in the DL Subband. The reporting format for the Subband CQI and Subband PMI is not restricted here. For the order of the Subband CQI and Subband PMI in CSI, it is arranged according to the order of actually calculated Subband CQI(s) and Subband PMI(s). For example, the Subband PMI and Subband CQI overlapping with the UL Subband or the guard subband are removed, and only the Subband CQI and Subband PMI corresponding to the CSI Subband corresponding to the available CSI-RS resources are reported. After receiving the CSI reported by the UE, the base station determines which PRBs correspond to the Subband CQI and the Subband PMI reported by the CSI according to the corresponding CSI-RS frequency domain resources in the DL Subband and the configurations of the CSI subband, so as to be used for subsequent scheduling of data in the frequency domain.

Fourth, separate configuration of CSI-RS resources and CSI reporting.

In separate configuration manner of CSI-RS resources, the CSI-RS resource in the SBFD symbol and the CSI-RS resource in the common symbol use different configurations, e.g., the base station may configure a second CSI-RS resource set and a third CSI-RS resource set for the UE. The second CSI-RS resource set may include CSI-RS resource(s) in the SBFD symbol, denoted as a third type of CSI-RS resource, and the third type of CSI-RS resource is located in the downlink subband in the SBFD symbol. The third CSI-RS resource set may include CSI-RS resource(s) in the common symbol, denoted as a fourth type of CSI-RS resource, and the fourth type of CSI-RS resource is located in a downlink symbol.

According to the third type of CSI-RS resource in the second CSI-RS resource set, configurations of the third type of CSI-RS resource are adjusted so that all the third type of CSI-RS resource are located in the DL Subband. In the time domain, for a periodic CSI-RS and a semi-persistent CSI-RS, a slot where the CSI-RS is located is determined according to CSI-CSI-ResourcePeriodicityAndOffset. For an aperiodic CSI-RS, a slot where the CSI-RS is located is determined through a slot of a DCI activation message. Further, firstOFDMSymbolInTimeDomain and firstOFDMSymbolInTimeDomain2 may further be used to determine a symbol location of the CSI-RS within the slot to ensure that all separately configured third type of CSI-RS resources are located in SBFD symbols, i.e., the third type of CSI-RS resources do not exceed the range of the DL Subband in the SBFD symbol.

Referring to FIG. 5, a schematic diagram of an SBFD symbol configuring a CSI-RS resource set (denoted as a second CSI-RS resource set) is shown. The second CSI-RS resource set includes third type of CSI-RS resources located in the SBFD symbol (such as CSI-RS0 and CSI-RS1, where CSI-RS0 is located in slot 1 of each frame structure period and CSI-RS1 is located in slot 4 of each frame structure period), and the third type of CSI-RS resources are located in DL Subbands, the third type of CSI-RS resources do not overlap with a UL Subband or a guard bandwidth.

In an example, the base station can allocate the second CSI-RS resource set and the third CSI-RS resource set to the UE, and the second CSI-RS resource set may include at least one third type of CSI-RS resource, and the third CSI-RS resource set may include at least one fourth type of CSI-RS resource.

The base station sends the second resource configuration information corresponding to the second CSI-RS resource set and the third resource configuration information corresponding to the third CSI-RS resource set to the UE. After receiving the second resource configuration information and the third resource configuration information, the UE determines the second CSI-RS resource set based on the second resource configuration information and the third CSI-RS resource set based on the third resource configuration information. The second resource configuration information may be dynamic resource configuration information or semi-persistent resource configuration information. The third resource configuration information may be dynamic resource configuration information or semi-persistent resource configuration information.

The base station may send a CSI-RS to the UE based on the third type of CSI-RS resource in the second CSI-RS resource set and/or the fourth type of CSI-RS resource in the third CSI-RS resource set, and the UE receives the CSI-RS based on the third type of CSI-RS resource in the second CSI-RS resource set and/or the fourth type of CSI-RS resource in the third CSI-RS resource set. The UE measures the received CSI-RS to obtain CSI, and sends the CSI to the base station.

In an example, for each fourth type of CSI-RS resource in the third CSI-RS resource set, since the fourth type of CSI-RS resource is located in a downlink symbol, the base station can send a CSI-RS based on the fourth type of CSI-RS resource to the UE. The UE can receive the CSI-RS based on the fourth type of CSI-RS resource and measure the CSI-RS received on the fourth type of CSI-RS resource to obtain CSI, and send the CSI to the base station.

In an example, for each third type of CSI-RS resource in the second CSI-RS resource set, the third type of CSI-RS resource is located in the SBFD symbol, and the third type of CSI-RS resource does not exceed the DL Subband range of the SBFD symbol. Therefore, the base station can send a CSI-RS based on the third type of CSI-RS resource to the UE, which receives the CSI-RS based on the third type of CSI-RS resource, measures the CSI-RS received on the third type of CSI-RS resource, and sends the CSI to the base station.

In an example, the third type of CSI-RS resource only includes resource(s) located in DL Subband(s) of SBFD symbol(s). If the third type of CSI-RS resource only occupies continuous resources of the DL Subband, the second resource configuration information includes an RB starting position and a number of occupied RBs corresponding to the continuous resources. If the third type of CSI-RS resource occupies two discontinuous resources in the DL Subband, the second resource configuration information includes RB starting positions and numbers of occupied RBs corresponding to the two resources, respectively. Referring to FIG. 5, it is shown that CSI-RS1 occupies continuous resources of the DL Subband and CSI-RS0 occupies discontinuous two resources of the DL Subband, i.e., the discontinuous two resources belong to the same CSI-RS and the discontinuous two resources are located on both sides of the UL Subband.

In the frequency domain, startingRB and nrofRBs in freqBand parameters are used to determine an RB starting position and a number of occupied RBs of a CSI-RS resource in the frequency domain, and the starting position and the number of occupied RBs are used to ensure that CSI-RS frequency domain resources are within DL Subbands. If the DL subbands are two discontinuous resources, an additional pair of startingRB and nrofRBs combinations are introduced into the CSI-RS resource configuration, and the two pairs of startingRB and nrofRBs combinations respectively indicate CSI-RS resources in different DL subbands, as shown below:

CSI-FrequencyOccupation ::= SEQUENCE {

startingRB    INTEGER (0..maxNrofPhysicalResourceBlocks-1),

nrofRBs        INTEGER (24..maxNrofPhysicalResourceBlocksPlus1),

startingRB1    INTEGER (0..maxNrofPhysicalResourceBlocks-1),

nrofRBs1        INTEGER (24..maxNrofPhysicalResourceBlocksPlus1),

...

}

In an example, there may be a problem of aligning a CSI-RS resource with a boundary of a DL Subband. An RB index of the RB starting position of the CSI-RS resource may be an integer multiple of a first value (e.g., 4), the number of RBs occupied by the CSI-RS resource is an integer multiple of a first value, and a minimum number of RBs for the number of occupied RBs is a second value (e.g., 24). While, the starting position of the DL Subband may not be an integer multiple of a first value, and the number of occupied RBs by the DL Subband may be less than the second value, and based on that the following manners may be used.

Manner a, an RB starting position corresponding to the third type of CSI-RS resource is an integer multiple of a first value, and a number of occupied RBs corresponding to the third type of CSI-RS resource is greater than or equal to a second value, and the number of occupied RBs corresponding to the third type of CSI-RS resource is an integer multiple of the first value. For example, when the third type of CSI-RS resource is configured in DL Subband, the starting position of RB is an integer multiple of 4, the number of occupied RBs is an integer multiple of 4, and the minimum number of RBs is 24, that is, the number of occupied RBs is greater than or equal to 24. If a size of a DL Subband is less than 24 RBs, the configuration of the third type of CSI-RS resource in the DL Subband is discarded.

Manner b, the RB starting position corresponding to the third type of CSI-RS resource can be a starting position of the DL Subband in the SBFD symbol, and the number of occupied RBs corresponding to the third type of CSI-RS resource can be any value. For example, when configuring the third type of CSI-RS resource in a DL Subband, the starting position of the DL Subband is the start position of RB corresponding to the third type of CSI-RS resource, and the number of occupied RBs is configured according to the frequency domain resources required by the third type of CSI-RS resource, that is, the number of occupied RBs is arbitrary. If the size of the third type CSI-RS resource exceeds the range of the DL Subband, the third type of CSI-RS resource occupies the whole DL Subband.

In Manner b, an RB index of an RB starting position corresponding to the third type of CSI-RS resource may not be an integer multiple of 4, and the number of occupied RBs corresponding to the third type of CSI-RS resource may not be an integer multiple of 4, and the size of the number of occupied RBs by the third type of CSI-RS resource is not limited, and may be any value.

For Manner b, if CSI reporting is based on Subband granularity (i.e., CSI subband), a first CSI subband corresponding to a CSI-RS resource in a first DL Subband starts from startingRB, and the size thereof is a size of CSI subband $N_{PRB}^{SB}$ configured by a high-level signalling. The range of subsequent CSI subbands is calculated in turn. If

$(\mathrm{nrofRBs})\bmod\left(\mathrm{N}_{\mathrm{PRB}}^{\mathrm{SB}}\right)\neq 0$ , the size of the last CSI subband is $(\mathrm{nrofRBs})\bmod\left(\mathrm{N}_{\mathrm{PRB}}^{\mathrm{SB}}\right)$ ; and if

$(\mathrm{nrofRBs})\bmod\left(\mathrm{N}_{\mathrm{PRB}}^{\mathrm{SB}}\right)= 0$ , the size of the last CSI subband is $\mathrm{N}_{\mathrm{PRB}}^{\mathrm{SB}}$ . If there is a second DL Subband and the DL Subband is configured with a CSI-RS resource, a first CSI subband corresponding to this CSI-RS resource starts from startingRB1, and the size thereof is a size of the CSI subband $\mathrm{N}_{\mathrm{PRB}}^{\mathrm{SB}}$ configured by high-level signalling. The range of subsequent CSI subbands is calculated in turn. If $(\mathrm{nrofRBs1})\bmod\left(\mathrm{N}_{\mathrm{PRB}}^{\mathrm{SB}}\right)\neq 0$ , the size of the last CSI subband is $(\mathrm{nrofRBs1})\bmod\left(\mathrm{N}_{\mathrm{PRB}}^{\mathrm{SB}}\right)$ and if $(\mathrm{nrofRBs1})\bmod\left(\mathrm{N}_{\mathrm{PRB}}^{\mathrm{SB}}\right)= 0$ , the size of the last CSI subband is

$\mathrm{N}_{\mathrm{PRB}}^{\mathrm{SB}}$ .In this way, the indexes of CSI subbands corresponding to CSI-RS resources in all DL Subband(s) are arranged from low to high according to the order of initial PRB indexes.

For Manner b, a new capability parameter such as csiRsCapability can be introduced into a UE's capability set. If the UE supports the CSI-RS configuration specified in Manner b, the UE will report this parameter to the base station during a capability reporting process, and the base station can use Manner b to configure CSI-RS resources. If the UE does not report this capability, the base station uses Manner a to configure CSI-RS resources by default. To sum up, if the UE's capability parameters indicate that the UE has the ability to support any position as the RB starting position, the Manner b can be adopted. If the UE's capability parameters indicate that the UE does not have the ability to support any RB starting position, the Manner a is adopted.

In an example, the UE performs measurements on a separately configured CSI-RS resource (e.g., the third type CSI-RS resource) and puts a measurement result into CSI corresponding to that CSI-RS resource for reporting. The UE calculates measurement results of a RI, an LI, L1-RSRP, an L1-SINR, a wideband CQI, a wideband PMI, etc., according to all time-frequency resources corresponding to the CSI-RS. For CSI reporting based on a Subband, ta Subband PMI and a Subband CQI in the CSI content are reported according to the above Subband index order.

Fifth, CSI-RS power control.

Whether using the unified configuration of CSI-RS resources or the separate configuration of CSI-RS resources, if it is not allowed to send CSI-RS on resources other than DL Subband, a power allocation algorithm of CSI-RS needs to be adjusted to adapt to new CSI-RS resource allocation strategy. Assume that total number of PRBs in BWP is $\mathrm{N}_{\mathrm{Total}}^{\mathrm{PRB}}$ , PRBs allocated to a CSI-RS in a common symbol is $\mathrm{N}_{\mathrm{CSI-RS}}^{\mathrm{PRB}}$ , and PRBs allocated to a CSI-RS in the SBFD symbol is

$\mathrm{N}_{\mathrm{SBFD,CSI-RS}}^{\mathrm{PRB}}$ . Since UL Subband and guard subband occupy part of PRB resources, $\mathrm{N}_{\mathrm{SBFD,CSI-RS}}^{\mathrm{PRB}} < \mathrm{N}_{\mathrm{CSI-RS}}^{\mathrm{PRB}}$ . It is assumed that the density of CSI-RS is $\rho$ , that is, each PRB has $\rho$ RE, and the transmission power reserved for CSI-RS is $\mathrm{P}_{\mathrm{CSI-RS}}^{\mathrm{Max}}$ the transmit power for CSI-RS that is sent only on the DL Subband can be set up in the following solution.

The transmission power $\mathrm{P}_{\mathrm{CSI-RS}}^{\mathrm{Max}}$ is fully used for CSI-RS. In this solution, Energy PER Resource Element (EPRE) in CSI-RS is $\mathrm{P}_{\mathrm{CSI-RS}}^{\mathrm{Max}}/(\mathrm{N}_{\mathrm{SBFD,CSI-RS}}^{\mathrm{PRB}}*\rho)$ , which is greater than the EPRE: $\mathrm{P}_{\mathrm{CSI-RS}}^{\mathrm{Max}}/(\mathrm{N}_{\mathrm{CSI-RS}}^{\mathrm{PRB}}*\rho)$ in the common symbol of CSI-RS, which improves the SINR of the UE when it receives the CSI-RS, and is beneficial for the reception of downlink CSI-RS.

It has the same EPRE as CSI-RS in a common symbol. In this solution, total power of CSI-RS is $\mathrm{P}_{\mathrm{CSI-RS}}^{\mathrm{Max}}*\mathrm{N}_{\mathrm{SBFD,CSI-RS}}^{\mathrm{PRB}}/\mathrm{N}_{\mathrm{CSI-RS}}^{\mathrm{PRB}}$ , which is less than $\mathrm{P}_{\mathrm{CSI-RS}}^{\mathrm{Max}}$ , so that adjacent channel interference can be avoided, but the total power of CSI-RS becomes smaller, which will have some influence on the reception of UE.

For which solution to use is determined by the base station based on the scenario and does not need to inform the UE.

In an example, when the base station indicates to send the CSI-RS based on the first partial resource of the second type of CSI-RS resource, and prohibit sending the CSI-RS based on the second partial resource of the second type of CSI-RS resource, the base station may determine target transmission power based on maximum transmission power (i.e. transmission power matching the first partial resource and second partial resource), and send the CSI-RS based on the first partial resource at the target transmission power. Or, the target transmission power is determined the maximum transmission power and a resource ratio of the second type of CSI-RS resource, where the resource ratio is a resource ratio of the first partial resource to the second type of CSI-RS resource (i.e., to the first partial resource and the second partial resource), and the CSI-RS is sent based on the first partial resource at the target transmission power.

Based on the same invention concept, a CSI-RS transmission apparatus as well as a base station and a UE, corresponding to the CSI-RS transmission method, are also provided. As the principle of solving the problem between the base station and UE is similar to that of the CSI-RS transmission method, the implementation of the base station and UE is referred to in the CSI-RS transmission method, and any repetition will not be repeated.

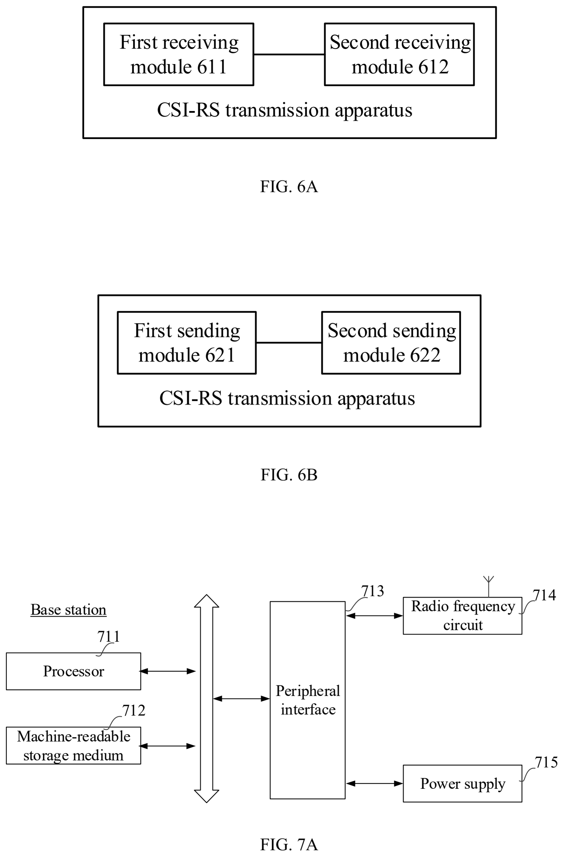

Based on the same application concept as the above method, an example of the present disclosure proposes a CSI-RS transmission apparatus, which is performed by a user equipment. As shown in FIG. 6A, the apparatus includes a first receiving module 611, configured to receive resource configuration information corresponding to at least one CSI-RS resource set sent by a base station, where the resource configuration information is used to indicate the at least one CSI-RS resource set, and the at least one CSI-RS resource set includes a CSI-RS resource located in an SBFD symbols, the CSI-RS resource exceeds a range of a downlink subband in the SBFD symbol, or the CSI-RS resource is located within a downlink subband in the SBFD symbol; a second receiving module 612, configured to receive a CSI-RS sent by the base station based on the CSI-RS resource in the at least one CSI-RS resource set, measure the received CSI-RS and report a measurement result to the base station.

In an example, the resource configuration information includes first resource configuration information corresponding to a first CSI-RS resource set, and the first resource configuration information is used to indicate the first CSI-RS resource set, and the first CSI-RS resource set includes a first type of CSI-RS resource located in a common symbol and a second type of CSI-RS resource located in the SBFD symbol, and the second type of CSI-RS resource exceeds the range of the downlink subband in the SBFD symbol; or

the resource configuration information includes second resource configuration information corresponding to a second CSI-RS resource set and third resource configuration information corresponding to a third CSI-RS resource set, the second resource configuration information is used to indicate the second CSI-RS resource set, and the third resource configuration information is used to indicate the third CSI-RS resource set; where the second CSI-RS resource set includes a third type of CSI-RS resource located in the SBFD symbol, and the third type of CSI-RS resource is located in the downlink subband in the SBFD symbol, the third CSI-RS resource set includes a fourth type of CSI-RS resource located in the common symbol.

In an example, in response to determining that the second type of CSI-RS resource includes a first partial resource located in the downlink subband in the SBFD symbol and a second partial resource located in an uplink subband or a guard subband in the SBFD symbol, when the second receiving module 612 receives the CSI-RS sent by the base station based on the second type of CSI-RS resource in the first CSI-RS resource set, the second receiving module is specifically configured to:

in response to determining that downlink data is allowed to be transmitted outside the downlink subband in the SBFD symbol, receive the CSI-RS based on the first partial resource and the second partial resource of the second type of CSI-RS resource; or

in response to determining that downlink data is not allowed to be transmitted outside the downlink subband in the SBFD symbol, prohibiting receiving the CSI-RS based on the first partial resource and the second partial resource of the second type of CSI-RS resource; or, receiving the CSI-RS based on the first partial resource of the second type of CSI-RS resource, and prohibiting receiving the CSI-RS based on the second partial resource of the second type of CSI-RS resource.

In an example, the apparatus further includes (not shown in FIG. 6A):

a sending module, configured to: after receiving the CSI-RS based on the first partial resource of the second type of CSI-RS resource, and prohibiting receiving the CSI-RS based on the second partial resource of the second type of CSI-RS resource, obtain first channel state information by measuring the CSI-RS received at the first partial resource of the second type of CSI-RS resource, and send the first channel state information to the base station; after prohibiting receiving the CSI-RS based on the first partial resource and the second partial resource of the second type of CSI-RS resource, perform measurement based on a CSI-RS that does not overlap with the uplink subband or the guard subband in a previous period, determine a measurement result as channel state information associated with a current period, and send the channel state information to the base station.

In an example, the sending module is further configured to: after receiving the CSI-RS sent by the base station based on the first type of CSI-RS resource in the first CSI-RS resource set, obtain second channel state information by measuring the CSI-RS received at the first type of CSI-RS resource, and send the second channel state information to the base station;

where, when the sending module sends the first channel state information to the base station and sends the second channel state information to the base station, the sending module is specifically configured to: in response to determining that the first channel state information includes pieces of first L1-RSRP and the second channel state information includes pieces of second L1-RSRP, select N pieces of first L1-RSRP from the pieces of first L1-RSRP and select N second L1-RSRP from the pieces of second L1-RSRP, and send the N pieces of first L1-RSRP and the N second pieces of L1-RSRP to the base station; or, select 2N pieces of L1-RSRP from the pieces of first L1-RSRP and the pieces of second L1-RSRP, and send the 2N pieces of L1-RSRP to the base station; and/or,

in response to determining that the first channel state information includes a plurality of first L1-SINRs and the second channel state information includes a plurality of second L1-SINRs, select N first L1-SINRs from the plurality of first L1-SINRs and select N second L1-SINRs from the plurality of second L1-SINRs, and send the N first L1- SINRs and the N second L1-INRs to the base station; or, select 2N L1-SINRs from the plurality of first L1-SINRs and the plurality of second L1-SINRs, and sending the 2N L1-SINRs to the base station.

In an example, when the sending module obtains the first channel state information by measuring the CSI-RS received at the first partial resource of the second type of CSI-RS resource, the sending module is specifically configured to:

in response to determining that the first partial resource of the second type of CSI-RS resource corresponds to at least one CSI subband, for each CSI subband, in response to determining that the CSI subband completely overlaps with the uplink subband or the guard subband in the SBFD symbol, prohibit measuring a CSI-RS received at the CSI subband;

in response to determining that the CSI subband does not overlap with the uplink subband or the guard subband in the SBFD symbol, obtain a measurement result of the CSI subband by measuring the CSI-RS received at the CSI subband;

in response to determining that the CSI subband partially overlaps with the uplink subband or the guard subband in the SBFD symbol, prohibit measuring the CSI-RS received at the CSI subband; or, determine whether to measure the CSI-RS received at the CSI subband according to a size of non-overlapping resource of the CSI subband, in response to determining to measure the CSI-RS received at the CSI subband, obtain the measurement result of the CSI subband by measuring the CSI-RS received at the CSI subband, or in response to determining not to measure the CSI-RS received at the CSI subband, prohibit measuring the CSI-RS received at the CSI subband; and

determine the first channel state information based on the measurement result of each CSI subband.

In an example, the first receiving module is further configured to receive first indication information sent by the base station, where the first indication information is used to indicate to prohibit transmitting the CSI-RS based on the first partial resource and the second partial resource of the second type of CSI-RS resource; or, used to indicate to transmit the CSI-RS based on the first partial resource of the second type of CSI-RS resource, and prohibit transmitting the CSI-RS based on the second partial resource of the second type of CSI-RS resource;

in response to determining that the first indication information is used to indicate to transmit the CSI-RS based on the first partial resource of the second type of CSI-RS resource, and prohibit transmitting the CSI-RS resource based on the second partial resource of the second type of CSI-RS resource, the first receiving module 611 is further configured to receive the second indication information sent by the base station;

where the second indication information is used to indicate to prohibit measuring the CSI-RS received at the CSI subband overlapping with the uplink subband or the guard subband, or to indicate whether to measure the CSI-RS received at the CSI subband according to the size of non-overlapping resource of the CSI subband.

In an example, the sending module is further configured to, after receiving the CSI-RS sent by the base station based on the first type of CSI-RS resource in the first CSI-RS resource set, obtain second channel state information by measuring the CSI-RS received at the first type of CSI-RS resource, and send the second channel state information to the base station, where the first channel state information and the second channel state information are sent to the base station through different uplink resources; or, the first channel state information and the second channel state information are sent to the base station through a same uplink resource.

In an example, the third type of CSI-RS resource only includes a resource located in the downlink subband in the SBFD symbol; where, in response to determining that the third type of CSI-RS resource only occupies continuous resources of the downlink subband, the second resource configuration information includes an RB starting position and a number of occupied RBs corresponding to the continuous resources;

in response to determining that the third type of CSI-RS resource occupies two discontinuous resources in the downlink subband, the second resource configuration information includes RB starting positions and numbers of occupied RBs corresponding to the two resources, respectively.

In an example, an RB starting position corresponding to the third type of CSI-RS resource is an integer multiple of a first value, a number of occupied RBs corresponding to the third type of CSI-RS resource is greater than or equal to a second value, and the number of occupied RBs corresponding to the third type of CSI-RS resource is an integer multiple of the first value; or,

the RB starting position corresponding to the third type of CSI-RS resource is a starting position of the downlink subband in the SBFD symbol, and the number of occupied RBs corresponding to the third type of CSI-RS resource is any value;
where, in response to determining that a capability parameter of the user equipment indicates that the user equipment has a capability to support any position as the RB starting position, the RB starting position corresponding to the third type of CSI-RS resource is the starting position of the downlink subband in the SBFD symbol, and the number of occupied RBs corresponding to the third type of CSI-RS resource is any value; or
in response to determining that the capability parameter of the user equipment indicates that the user equipment does not have the capability to support any position as the RB starting position, the RB starting position corresponding to the third type of CSI-RS resource is an integer multiple of the first value, and the number of occupied RBs corresponding to the third type of CSI-RS resource is greater than or equal to the second value, and the number of occupied RBs corresponding to the third type of CSI-RS resource is an integer multiple of the first value.

In an example, the first receiving module 611 is further configured to receive third indication information sent by the base station, where the third indication information is used to indicate that the downlink data is allowed to be transmitted outside the downlink subband in the SBFD symbol, or used to indicate that downlink data is not allowed to be transmitted outside the downlink subband in the SBFD symbol; and/or,
the first receiving module 611 is further configured to receive fourth indication information sent by the base station, where the fourth indication information is used to indicate that uplink data is allowed to be transmitted outside an uplink subband in the SBFD symbol, or used to indicate that the uplink data is not allowed to be transmitted outside the uplink subband in the SBFD symbol.

Based on the same application concept as the above method, an example of the present disclosure proposes a CSI-RS transmission apparatus, which is performed by a base station. As shown in FIG. 6B, the apparatus may include a first sending module 621, configured to send resource configuration information corresponding to at least one CSI-RS resource set to a user equipment, where the resource configuration information is used to indicate the at least one CSI-RS resource set used by the user equipment, and the at least one CSI-RS resource set includes a CSI-RS resource located in an SBFD symbol, the CSI-RS resource exceeds a range of a downlink subband in the SBFD symbol, or the CSI-RS resource is located within a downlink subband in the SBFD symbol; a second sending module 622, configured to send a CSI-RS to the user equipment based on the CSI-RS resource in the at least one CSI-RS resource set, so that the user equipment receives the CSI-RS based on the CSI-RS resource in the at least one CSI-RS resource set.

In an example, when the first sending module 621 sends the resource configuration information corresponding to the at least one CSI-RS resource set to the user equipment, the first sending module 621 is specifically configured to:

in response to determining that the user equipment corresponds to a first CSI-RS resource set, send first resource configuration information corresponding to the first CSI-RS resource set to the user equipment, where the first CSI-RS resource set includes a first type of CSI-RS resource located in a common symbol and a second type of CSI-RS resource located in the SBFD symbol, and the second type of CSI-RS resource exceeds the range of the downlink subband in the SBFD symbol; or
in response to determining that the user equipment corresponds to a second CSI-RS resource set and a third CSI-RS resource set, send second resource configuration information corresponding to the second CSI-RS resource set and third resource configuration information corresponding to the third CSI-RS resource set, where the second CSI-RS resource set includes a third type of CSI-RS resource located in the SBFD symbol, and the third type of CSI-RS resource is located in the downlink subband in the SBFD symbol, the third CSI-RS resource set includes a fourth type of CSI-RS resource located in the common symbol.

In an example, in response to determining that the second type of CSI-RS resource includes a first partial resource located in the downlink subband in the SBFD symbol and a second partial resource located in an uplink subband or a guard subband in the SBFD symbol, when the second sending module 622 sends the CSI-RS to the user equipment based on the second type of CSI-RS resource in the first CSI-RS resource set, the second sending module 622 is specifically configured to:

in response to determining that downlink data is allowed to be transmitted outside the downlink subband in the SBFD symbol, send the CSI-RS based on the first partial resource and the second partial resource of the second type of CSI-RS resource; or
in response to determining that downlink data is not allowed to be transmitted outside the downlink subband in the SBFD symbol, prohibit sending the CSI-RS resource based on the first partial resource and the second partial resource of the second type of CSI-RS resource; or, send the CSI-RS based on the first partial resource of the second type of CSI-RS resource, and prohibit sending the CSI-RS resource based on the second partial resource of the second type of CSI-RS resource.

In an example, the first sending module 621 is further configured to send first indication information to the user equipment, where the first indication information is used to indicate to prohibit transmitting the CSI-RS based on the first partial resource and the second partial resource of the second type of CSI-RS resource; or, used to indicate to transmit the CSI-RS based on the first partial resource of the second type of CSI-RS resource, and to prohibit transmitting the CSI-RS based on the second partial resource of the second type of CSI-RS resource; and

in response to determining that the first indication information is used to indicate to transmit the CSI-RS based on the first partial resource of the second type of CSI-RS resource, and to prohibit transmitting the CSI-RS resource based on the second partial resource of the second type of CSI-RS resource, where the first sending module is further configured to send second indication information to the user equipment;
where the second indication information is used to indicate to prohibit measuring the CSI-RS received at the CSI subband overlapping with the uplink subband or the guard subband, or used to indicate whether to measure the CSI-RS received at the CSI subband according to a size of non-overlapping resource of the CSI subband.

In an example, the third type of CSI-RS resource only includes a resource located in the downlink subband in the SBFD symbol; where, in response to determining that the third type of CSI-RS resource only occupies continuous resources of the downlink subband, the second resource configuration information includes an RB starting position and a number of occupied RBs corresponding to the continuous resources;
in response to determining that the third type of CSI-RS resource occupies two discontinuous resources in the downlink subband, the second resource configuration information includes RB starting positions and numbers of occupied RBs corresponding to the two resources, respectively.
In an example, an RB starting position corresponding to the third type of CSI-RS resource is an integer multiple of a first value, a number of occupied RBs corresponding to the third type of CSI-RS resource is greater than or equal to a second value, and the number of occupied RBs corresponding to the third type of CSI-RS resource is an integer multiple of the first value; or,

the RB starting position corresponding to the third type of CSI-RS resource is a starting position of the downlink subband in the SBFD symbol, and the number of occupied RBs corresponding to the third type of CSI-RS resource is any value;
where, in response to determining that a capability parameter of the user equipment indicates that the user equipment has a capability to support any position as the RB starting position, the RB starting position corresponding to the third type of CSI-RS resource is the starting position of the downlink subband in the SBFD symbol, and the number of occupied RBs corresponding to the third type of CSI-RS resource is any value; or
in response to determining that the capability parameter of the user equipment indicates that the user equipment does not have the capability to support any position as the RB starting position, the RB starting position corresponding to the third type of CSI-RS resource is an integer multiple of the first value, and the number of occupied RBs corresponding to the third type of CSI-RS resource is greater than or equal to the second value, and the number of occupied RBs corresponding to the third type of CSI-RS resource is an integer multiple of the first value.

In an example, the first sending module 621 is further configured to send third indication information to the user equipment, where the third indication information is used to indicate that the downlink data is allowed to be transmitted outside the downlink subband in the SBFD symbol, or used to indicate that downlink data is not allowed to be transmitted outside the downlink subband in the SBFD symbol; and/or, the first sending module is further configured to send fourth indication information to the user equipment, where the fourth indication information is used to indicate that uplink data is allowed to be transmitted outside an uplink subband in the SBFD symbol, or used to indicate that the uplink data is not allowed to be transmitted outside the uplink subband in the SBFD symbol.
In an example, when the second sending module 622 sends the CSI-RS based on the first partial resource of the second type of CSI-RS resource, and prohibits sending the CSI-RS resource based on the second partial resource of the second type of CSI-RS resource, the second sending module is specifically configured to:

determine target transmission power based on maximum transmission power of the second type of CSI-RS resource; or, determine the target transmission power based on the maximum transmission power and a resource ratio of the second type of CSI-RS resource, where the resource ratio is a resource ratio of the first partial resource to the second type of CSI-RS resource;

send the CSI-RS based on the first partial resource at the target transmission power.

Based on the same application concept as the above method, a base station is proposed in an example of the present disclosure. As shown in FIG. 7A, the base station may include a processor 711 and a machine-readable storage medium 712, and the machine-readable storage medium 712 stores machine-executable instructions that can be executed by the processor 711. The processor 711 is configured to execute machine executable instructions to realize the CSI-RS transmission method disclosed in the above example of the present disclosure.

In an example, the processor 711 may include one or more processing cores, such as a 4-core processor, an 8-core processor, etc. The processor 711 may be implemented in at least one hardware form of digital signal processing (DSP), field-programmable gate array (FPGA) and programmable logic array (PLA). The processor 711 may also include a main processor and a co-processor. The main processor is a processor for processing data in an awake state, also called central processing unit (CPU). The co-processor is a low-power processor for processing data in a standby state. In some embodiments, the processor 711 may be integrated with a graphics processing unit (GPU), and the GPU is configured to render and draw contents to be displayed on a display screen.

In an example, the base station may optionally include: a peripheral interface 713 and at least one peripheral device. The processor 711 and the peripheral interface 713 can be connected by a bus or a signal line. Each peripheral can be connected to the peripheral interface 713 via a bus, a signal line or a circuit board. The peripheral device may include: at least one of a radio frequency circuit 714 and a power supply 715.

The radio frequency circuit 714 is configured to receive and transmit radio frequency (RF) signals, also called electromagnetic signals. The radio frequency circuit 714 communicates with the communication network and other communication devices via electromagnetic signals. The radio frequency circuit 714 converts electrical signals into electromagnetic signals for transmission, or, converts received electromagnetic signals to electrical signals. In some examples, the radio frequency circuit 714 includes: an antenna system, an RF transceiver, one or more amplifiers, a tuner, an oscillator, a digital signal processor, a user identity module card, and the like. The radio frequency circuit 714 can communicate with a user equipment via at least one wireless communication protocol. The wireless communication protocols include, but are not limited to: World Wide Web, metropolitan area network, intranet, various generations of mobile communication networks (2G, 3G, 4G, and 5G), wireless local area networks, and/or wireless fidelity (WiFi) networks.

The power supply 715 is configured to supply power to various components in the base station. The power supply 715 can be alternating current, direct current, disposable battery or rechargeable battery.

For example, when the processor 711 executes the machine-executable instructions, it controls the radio frequency circuit 714 to realize the following steps: sending resource configuration information corresponding to at least one CSI-RS resource set to a user equipment, where the resource configuration information is used to indicate the at least one CSI-RS resource set used by the user equipment, and the at least one CSI-RS resource set includes a CSI-RS resource located in an SBFD symbol, the CSI-RS resource exceeds a range of a downlink subband in the SBFD symbol, or the CSI-RS resource is located within a downlink subband in the SBFD symbol;
sending a CSI-RS to the user equipment based on the CSI-RS resource in the at least one CSI-RS resource set, so that the user equipment receives the CSI-RS based on the CSI-RS resource in the at least one CSI-RS resource set.

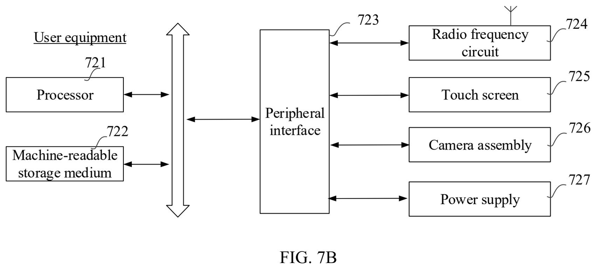

Based on the same application concept as the above method, a user equipment is proposed in an example of the present disclosure. As shown in FIG. 7B, the user equipment may include a processor 721 and a machine-readable storage medium 722, and the machine-readable storage medium 722 stores machine-executable instructions that can be executed by the processor 721. The processor 721 is configured to execute machine executable instructions to realize the CSI-RS transmission method disclosed in the above example of the present disclosure.

In an example, the processor 721 may include one or more processing cores, such as a 4-core processor, an 8-core processor, etc. The processor 721 can be implemented in at least one hardware form of DSP, FPGA and PLA. The processor 721 may also include a main processor and a co-processor.

In an example, the user equipment may optionally include: a peripheral interface 723 and at least one peripheral device. The processor 721 and the peripheral interface 723 can be connected by a bus or a signal line. Each peripheral can be connected to the peripheral interface 723 via a bus, a signal line or a circuit board. The peripheral device may include: at least one of a radio frequency circuit 724, a touch screen 725, a camera 726 and a power supply 727.

The radio frequency circuit 724 is configured to receive and transmit RF signals, also called electromagnetic signals. The radio frequency circuit 724 communicates with the communication network and other communication devices via electromagnetic signals. The radio frequency circuit 724 converts electrical signals into electromagnetic signals for transmission, or, converts received electromagnetic signals to electrical signals. In some examples, the radio frequency circuit 724 includes: an antenna system, an RF transceiver, one or more amplifiers, a tuner, an oscillator, a digital signal processor, a user identity module card, and the like. The radio frequency circuit 724 can communicate with a base station via at least one wireless communication protocol. The wireless communication protocols include, but are not limited to: World Wide Web, metropolitan area network, intranet, various generations of mobile communication networks, wireless local area networks, and/or WiFi networks.

The display screen 725 is configured to display a user interface (UI). The UI may include graphics, text, icons, videos and any combination thereof. When the display screen 725 is a touch display screen, the display screen 725 further has the ability to collect touch signals on or above a surface of the display screen 725. The touch signal can be input as a control signal to the processor 721 for processing. At this time, the display screen 725 can further be used to provide virtual buttons and/or virtual keyboards, also called soft buttons and/or soft keyboards.

In some embodiments, the display screen 725 may be one, which is disposed on a front panel of the user equipment. In other embodiments, the display screens 725 may be at least two, which are respectively disposed on different surfaces of the user equipment or in a folded design. In still other embodiments, the display screen 725 may be a flexible display screen, which is disposed on a curved surface or a folded surface of the user equipment. Even, the display screen 725 can further be set as a non-rectangular irregular pattern, that is, a special-shaped screen. The display screen 725 can be prepared using materials such as liquid crystal display (LCD) and organic light emitting diode (OLED).

The camera assembly 726 is configured to capture images or videos. In some embodiments, the camera assembly 726 includes a front camera and/or a rear camera. Usually, the front camera is provided on the front panel of the user equipment, and the rear camera is provided on the back of the user equipment. In some embodiments, there are at least two rear cameras, which are any one of a main camera, a depth-of-field camera, a wide-angle camera and a telephoto camera, so as to realize a fusion of the main camera and the depth-of-field camera to realize a background blur function, the fusion of the main camera and the wide-angle camera to realize panoramic shooting, virtual reality (VR) shooting function or other fusion shooting functions. In some embodiments, the camera assembly 726 may further include a flash. The flash may be a single color temperature flash or a dual color temperature flash. The dual color temperature flash refers to a combination of warm light flash and cold light flash, which can be used for light compensation under different color temperatures.

The power supply 727 is configured to supply power to various components in the user equipment. The power supply 727 can be alternating current, direct current, disposable battery or rechargeable battery. When the power supply 727 includes a rechargeable battery, the rechargeable battery may be a wired rechargeable battery or a wireless rechargeable battery. Wired rechargeable batteries are batteries charged by wired lines, and wireless rechargeable batteries are batteries charged by wireless coils. The rechargeable battery can further be used to support fast charging technology.

For example, when the processor 721 executes the machine-executable instructions, it controls the radio frequency circuit 724 to realize the following steps: receiving resource configuration information corresponding to at least one CSI-RS resource set sent by a base station, where the resource configuration information is used to indicate the at least one CSI-RS resource set, and the at least one CSI-RS resource set includes a CSI-RS resource located in an SBFD symbol, the CSI-RS resource exceeds a range of a downlink subband in the SBFD symbol, or the CSI-RS resource is located within a downlink subband in the SBFD symbol;

receiving a CSI-RS sent by the base station based on the CSI-RS resource in the at least one CSI-RS resource set.

Based on the same application concept as the above method, an example of the present disclosure further provides a machine-readable storage medium, the machine-readable storage medium having stored thereon a number of computer instructions, the computer instructions, when executed by a processor, being capable of realizing the CSI-RS transmission method disclosed in the above example of the present disclosure.

The machine-readable storage medium may be any electronic, magnetic, optical or other physical storage apparatus, and may contain or store information, such as executable instructions, data, and the like. For example, the machine-readable storage medium may be: a random access memory (RAM), a volatile memory, a non-volatile memory, a flash memory, a storage drive (e.g., a hard disk drive), a solid state drive, any type of storage disk (e.g., a CD-ROM, a dvd, etc.), or the like, or a combination thereof.

The systems, apparatuses, modules or units illustrated in the above embodiments may specifically be realized by a computer or an entity, or by a product with a certain function. A typical implementation device is a computer, and a specific form of the computer may be a personal computer, a laptop computer, a cellular telephone, a camera phone, a smart phone, a personal digital assistant, a media player, a navigation device, an e-mail transceiver, a gaming console, a tablet computer, a wearable device, or a combination of any of these devices.

The above is only embodiments of the present disclosure and is not intended to limit the present disclosure. Various modifications and variations of the present disclosure will occur to those skilled in the art. Any modifications, equivalent substitutions, improvements, etc. made within the spirit and principle of the present disclosure should be included in the scope of the claims of the present disclosure.

## Claims

1. A channel state information reference signal (CSI-RS) transmission method, performed by a user equipment, comprising:

receiving resource configuration information corresponding to at least one CSI-RS resource set sent by a base station, wherein the resource configuration information is used to indicate the at least one CSI-RS resource set, and the at least one CSI-RS resource set comprises a CSI-RS resource located in a subband full duplex (SBFD) symbol, the CSI-RS resource exceeds a range of a downlink subband in the SBFD symbol, or the CSI-RS resource is located within a downlink subband in the SBFD symbol; and
receiving a CSI-RS sent by the base station based on the CSI-RS resource in the at least one CSI-RS resource set.

2. The method according to claim 1, wherein,

the resource configuration information comprises first resource configuration information corresponding to a first CSI-RS resource set, and the first resource configuration information is used to indicate the first CSI-RS resource set, and the first CSI-RS resource set comprises a first type of CSI-RS resource located in a common symbol and a second type of CSI-RS resource located in the SBFD symbol, and the second type of CSI-RS resource exceeds the range of the downlink subband in the SBFD symbol; or
the resource configuration information comprises second resource configuration information corresponding to a second CSI-RS resource set and third resource configuration information corresponding to a third CSI-RS resource set, the second resource configuration information is used to indicate the second CSI-RS resource set, and the third resource configuration information is used to indicate the third CSI-RS resource set, wherein the second CSI-RS resource set comprises a third type of CSI-RS resource located in the SBFD symbol, the third type of CSI-RS resource is located in the downlink subband in the SBFD symbol, and the third CSI-RS resource set comprises a fourth type of CSI-RS resource located in the common symbol.

3. The method according to claim 2, wherein in response to determining that the second type of CSI-RS resource comprises a first partial resource located in the downlink subband in the SBFD symbol and a second partial resource located in an uplink subband or a guard subband in the SBFD symbol, receiving the CSI-RS sent by the base station based on the second type of CSI-RS resource in the first CSI-RS resource set comprises:

in response to determining that downlink data is allowed to be transmitted outside the downlink subband in the SBFD symbol, receiving the CSI-RS based on the first partial resource and the second partial resource of the second type of CSI-RS resource; or
in response to determining that downlink data is not allowed to be transmitted outside the downlink subband in the SBFD symbol,

prohibiting receiving the CSI-RS based on the first partial resource and the second partial resource of the second type of CSI-RS resource; or,
receiving the CSI-RS based on the first partial resource of the second type of CSI-RS resource, and prohibiting receiving the CSI-RS based on the second partial resource of the second type of CSI-RS resource.

4. The method according to claim 3, wherein,

after receiving the CSI-RS based on the first partial resource of the second type of CSI-RS resource, and prohibiting receiving the CSI-RS based on the second partial resource of the second type of CSI-RS resource, the method further comprises:
obtaining first channel state information by measuring the CSI-RS received at the first partial resource of the second type of CSI-RS resource, and sending the first channel state information to the base station; and
after prohibiting receiving the CSI-RS based on the first partial resource and the second partial resource of the second type of CSI-RS resource, the method further comprises:
performing measurement based on a CSI-RS that does not overlap with the uplink subband or the guard subband in a previous period, determining a measurement result as channel state information associated with a current period, and sending the channel state information to the base station.

5. The method according to claim 4, wherein,

after receiving the CSI-RS sent by the base station based on the first type of CSI-RS resource in the first CSI-RS resource set, measuring the CSI-RS received at the first type of CSI-RS resource to obtain second channel state information, and sending the second channel state information to the base station;

wherein, sending the first channel state information to the base station and sending the second channel state information to the base station comprises:

in response to determining that the first channel state information comprises pieces of first layer 1 reference signal receiving power (L1-RSRP) and the second channel state information comprises pieces of second L1-RSRP,

selecting N pieces of first L1-RSRP from the pieces of first L1-RSRP and selecting N pieces of second L1-RSRP from the pieces of second L1-RSRP, and sending the N pieces of first L1-RSRP and the N pieces of second L1-RSRP to the base station; or,
selecting 2N pieces of L1-RSRP from the pieces of first L1-RSRP and the pieces of second L1-RSRP, and sending the 2N pieces of L1-RSRP to the base station; and/or,

in response to determining that the first channel state information comprises a plurality of first layer 1 signal-interference-noise ratio (L1-SINRs) and the second channel state information comprises a plurality of second L1-SINRs,

selecting N first L1-SINRs from the plurality of first L1-SINRs and selecting N second L1-SINRs from the plurality of second L1-SINRs, and sending the N first L1- SINRs and the N second L1-SINRs to the base station; or,
selecting 2N L1-SINRs from the plurality of first L1-SINRs and the plurality of second L1-SINRs, and sending the 2N L1-SINRs to the base station.

6. The method according to claim 4, wherein obtaining the first channel state information by measuring the CSI-RS received at the first partial resource of the second type of CSI-RS resource comprises:

in response to determining that the first partial resource of the second type of CSI-RS resource corresponds to at least one channel state information (CSI) subband, for each CSI subband,

in response to determining that the CSI subband completely overlaps with the uplink subband or the guard subband in the SBFD symbol, prohibiting measuring a CSI-RS received at the CSI subband;
in response to determining that the CSI subband does not overlap with the uplink subband or the guard subband in the SBFD symbol, obtaining a measurement result of the CSI subband by measuring the CSI-RS received at the CSI subband;
in response to determining that the CSI subband partially overlaps with the uplink subband or the guard subband in the SBFD symbol,

prohibiting measuring the CSI-RS received at the CSI subband; or,
determining whether to measure the CSI-RS received at the CSI subband according to a size of non-overlapping resource of the CSI subband, in response to determining to measure the CSI-RS received at the CSI subband, obtaining the measurement result of the CSI subband by measuring the CSI-RS received at the CSI subband, or in response to determining not to measure the CSI-RS received at the CSI subband, prohibiting measuring the CSI-RS received at the CSI subband; and

determining the first channel state information based on the measurement result of each CSI subband.

7. The method according to claim 6, further comprising:

receiving first indication information sent by the base station, wherein the first indication information is used to indicate to prohibit transmitting the CSI-RS based on the first partial resource and the second partial resource of the second type of CSI-RS resource; or, used to indicate to transmit the CSI-RS based on the first partial resource of the second type of CSI-RS resource, and prohibit transmitting the CSI-RS based on the second partial resource of the second type of CSI-RS resource; and
in response to determining that the first indication information is used to indicate to transmit the CSI-RS based on the first partial resource of the second type of CSI-RS resource, and prohibit transmitting the CSI-RS based on the second partial resource of the second type of CSI-RS resource, receiving second indication information sent by the base station, wherein the second indication information is used to indicate to prohibit measuring the CSI-RS received at the CSI subband overlapping with the uplink subband or the guard subband, or used to indicate whether to measure the CSI-RS received at the CSI subband according to the size of non-overlapping resource of the CSI subband.

8. The method according to claim 4, wherein,

after receiving the CSI-RS sent by the base station based on the first type of CSI-RS resource in the first CSI-RS resource set, obtaining second channel state information by measuring the CSI-RS received at the first type of CSI-RS resource, and transmitting the second channel state information to the base station;
wherein the first channel state information and the second channel state information are sent to the base station through different uplink resources; or, the first channel state information and the second channel state information are sent to the base station through a same uplink resource.

9. The method according to claim 2, wherein the third type of CSI-RS resource only comprises a resource located in the downlink subband in the SBFD symbol;

in response to determining that the third type of CSI-RS resource only occupies continuous resources of the downlink subband, the second resource configuration information comprises a resource block (RB) starting position and a number of occupied RBs corresponding to the continuous resources; and
in response to determining that the third type of CSI-RS resource occupies two discontinuous resources in the downlink subband, the second resource configuration information comprises RB starting positions and numbers of occupied RBs corresponding to the two resources, respectively.

10. The method according to claim 9,

wherein an RB starting position corresponding to the third type of CSI-RS resource is an integer multiple of a first value, a number of occupied RBs corresponding to the third type of CSI-RS resource is greater than or equal to a second value, and the number of occupied RBs corresponding to the third type of CSI-RS resource is an integer multiple of the first value; or,
wherein the RB starting position corresponding to the third type of CSI-RS resource is a starting position of the downlink subband in the SBFD symbol, and the number of occupied RBs corresponding to the third type of CSI-RS resource is any value;
wherein, in response to determining that a capability parameter of the user equipment indicates that the user equipment has a capability to support any position as the RB starting position, the RB starting position corresponding to the third type of CSI-RS resource is the starting position of the downlink subband in the SBFD symbol, and the number of occupied RBs corresponding to the third type of CSI-RS resource is any value; or
in response to determining that the capability parameter of the user equipment indicates that the user equipment does not have the capability to support any position as the RB starting position, the RB starting position corresponding to the third type of CSI-RS resource is an integer multiple of the first value, and the number of occupied RBs corresponding to the third type of CSI-RS resource is greater than or equal to the second value, and the number of occupied RBs corresponding to the third type of CSI-RS resource is an integer multiple of the first value.

11. The method according to any one of claims 1-10, further comprising:

receiving third indication information sent by the base station, wherein the third indication information is used to indicate that the downlink data is allowed to be transmitted outside the downlink subband in the SBFD symbol, or used to indicate that downlink data is not allowed to be transmitted outside the downlink subband in the SBFD symbol; and/or,
receiving fourth indication information sent by the base station, wherein the fourth indication information is used to indicate that uplink data is allowed to be transmitted outside an uplink subband in the SBFD symbol, or used to indicate that the uplink data is not allowed to be transmitted outside the uplink subband in the SBFD symbol.

12. A channel state information reference signal (CSI-RS) transmission method, performed by a base station, comprising:

sending resource configuration information corresponding to at least one CSI-RS resource set to a user equipment, wherein the resource configuration information is used to indicate the at least one CSI-RS resource set used by the user equipment, and the at least one CSI-RS resource set comprises a CSI-RS resource located in a subband full duplex (SBFD) symbol, the CSI-RS resource exceeds a range of a downlink subband in the SBFD symbol, or the CSI-RS resource is located within a downlink subband in the SBFD symbol; and

sending a CSI-RS to the user equipment based on the CSI-RS resource in the at least one CSI-RS resource set, so that the user equipment receives the CSI-RS based on the CSI-RS resource in the at least one CSI-RS resource set.

13. The method according to claim 12, wherein sending the resource configuration information corresponding to the at least one CSI-RS resource set to the user equipment comprises:

in response to determining that the user equipment corresponds to a first CSI-RS resource set, sending first resource configuration information corresponding to the first CSI-RS resource set to the user equipment, wherein the first CSI-RS resource set comprises a first type of CSI-RS resource located in a common symbol and a second type of CSI-RS resource located in the SBFD symbol, and the second type of CSI-RS resource exceeds the range of the downlink subband in the SBFD symbol; or

in response to determining that the user equipment corresponds to a second CSI-RS resource set and a third CSI-RS resource set, sending second resource configuration information corresponding to the second CSI-RS resource set and third resource configuration information corresponding to the third CSI-RS resource set, wherein the second CSI-RS resource set comprises a third type of CSI-RS resource located in the SBFD symbol, and the third type of CSI-RS resource is located in the downlink subband in the SBFD symbol, the third CSI-RS resource set comprises a fourth type of CSI-RS resource located in the common symbol.

14. The method according to claim 13, wherein in response to determining that the second type of CSI-RS resource comprises a first partial resource located in the downlink subband in the SBFD symbol and a second partial resource located in an uplink subband or a guard subband in the SBFD symbol, sending the CSI-RS to the user equipment based on the second type of CSI-RS resource in the first CSI-RS resource set comprises:

in response to determining that downlink data is allowed to be transmitted outside the downlink subband in the SBFD symbol, sending the CSI-RS based on the first partial resource and the second partial resource of the second type of CSI-RS resource; or

in response to determining that downlink data is not allowed to be transmitted outside the downlink subband in the SBFD symbol,

prohibiting sending the CSI-RS resource based on the first partial resource and the second partial resource of the second type of CSI-RS resource; or,

sending the CSI-RS based on the first partial resource of the second type of CSI-RS resource, and prohibiting sending the CSI-RS resource based on the second partial resource of the second type of CSI-RS resource.

15. The method according to claim 14, further comprising:

sending first indication information to the user equipment, wherein the first indication information is used to indicate to prohibit transmitting the CSI-RS based on the first partial resource and the second partial resource of the second type of CSI-RS resource; or, used to indicate to transmit the CSI-RS based on the first partial resource of the second type of CSI-RS resource, and prohibit transmitting the CSI-RS based on the second partial resource of the second type of CSI-RS resource; and

in response to determining that the first indication information is used to indicate to transmit the CSI-RS based on the first partial resource of the second type of CSI-RS resource, and prohibit transmitting the CSI-RS based on the second partial resource of the second type of CSI-RS resource, sending second indication information to the user equipment, wherein the second indication information is used to indicate to prohibit measuring the CSI-RS received at the CSI subband overlapping with the uplink subband or the guard subband, or used to indicate whether to measure the CSI-RS received at the CSI subband according to a size of non-overlapping resource of the CSI subband.

16. The method according to claim 13, wherein the third type of CSI-RS resource only comprises a resource located in the downlink subband in the SBFD symbol;

in response to determining that the third type of CSI-RS resource only occupies continuous resources of the downlink subband, the second resource configuration information comprises a resource block (RB) starting position and a number of occupied RBs corresponding to the continuous resources; and
in response to determining that the third type of CSI-RS resource occupies two discontinuous resources in the downlink subband, the second resource configuration information comprises RB starting positions and numbers of occupied RBs corresponding to the two resources, respectively.

**17.** The method according to claim 16,

wherein an RB starting position corresponding to the third type of CSI-RS resource is an integer multiple of a first value, a number of occupied RBs corresponding to the third type of CSI-RS resource is greater than or equal to a second value, and the number of occupied RBs corresponding to the third type of CSI-RS resource is an integer multiple of the first value; or,
wherein the RB starting position corresponding to the third type of CSI-RS resource is a starting position of the downlink subband in the SBFD symbol, and the number of occupied RBs corresponding to the third type of CSI-RS resource is any value;
wherein, in response to determining that a capability parameter of the user equipment indicates that the user equipment has a capability to support any position as the RB starting position, the RB starting position corresponding to the third type of CSI-RS resource is the starting position of the downlink subband in the SBFD symbol, and the number of occupied RBs corresponding to the third type of CSI-RS resource is any value; or
in response to determining that the capability parameter of the user equipment indicates that the user equipment does not have the capability to support any position as the RB starting position, the RB starting position corresponding to the third type of CSI-RS resource is an integer multiple of the first value, and the number of occupied RBs corresponding to the third type of CSI-RS resource is greater than or equal to the second value, and the number of occupied RBs corresponding to the third type of CSI-RS resource is an integer multiple of the first value.

**18.** The method according to any one of claims 12-17, further comprising:

sending third indication information to the user equipment, wherein the third indication information is used to indicate that the downlink data is allowed to be transmitted outside the downlink subband in the SBFD symbol, or used to indicate that downlink data is not allowed to be transmitted outside the downlink subband in the SBFD symbol; and/or,
sending fourth indication information to the user equipment, wherein the fourth indication information is used to indicate that uplink data is allowed to be transmitted outside an uplink subband in the SBFD symbol, or used to indicate that the uplink data is not allowed to be transmitted outside the uplink subband in the SBFD symbol.

**19.** The method according to claim 14, wherein, sending the CSI-RS based on the first partial resource of the second type of CSI-RS resource, and prohibiting sending the CSI-RS resource based on the second partial resource of the second type of CSI-RS resource comprises:

determining target transmission power based on maximum transmission power of the second type of CSI-RS resource; or, determining the target transmission power based on the maximum transmission power and a resource ratio of the second type of CSI-RS resource, wherein the resource ratio is a resource ratio of the first partial resource to the second type of CSI-RS resource;
sending the CSI-RS based on the first partial resource at the target transmission power.

**20.** A channel state information reference signal (CSI-RS) transmission apparatus, performed by a user equipment, comprising:

a first receiving module, configured to receive resource configuration information corresponding to at least one CSI-RS resource set sent by a base station, wherein the resource configuration information is used to indicate the at least one CSI-RS resource set, and the at least one CSI-RS resource set comprises a CSI-RS resource located in a subband full duplex (SBFD) symbol, the CSI-RS resource exceeds a range of a downlink subband in the SBFD symbol, or the CSI-RS resource is located within a downlink subband in the SBFD symbol; and
a second receiving module, configured to receive a CSI-RS sent by the base station based on the CSI-RS resource in the at least one CSI-RS resource set.

**21.** The apparatus according to claim 20, wherein,

the resource configuration information comprises first resource configuration information corresponding to a first CSI-RS resource set, and the first resource configuration information is used to indicate the first CSI-RS resource set, and the first CSI-RS resource set comprises a first type of CSI-RS resource located in a common symbol and a second type of CSI-RS resource located in the SBFD symbol, and the second type of CSI-RS resource exceeds the range of the downlink subband in the SBFD symbol; or

the resource configuration information comprises second resource configuration information corresponding to a second CSI-RS resource set and third resource configuration information corresponding to a third CSI-RS resource set, the second resource configuration information is used to indicate the second CSI-RS resource set, and the third resource configuration information is used to indicate the third CSI-RS resource set, wherein the second CSI-RS resource set comprises a third type of CSI-RS resource located in the SBFD symbol, the third type of CSI-RS resource is located in the downlink subband in the SBFD symbol, and the third CSI-RS resource set comprises a fourth type of CSI-RS resource located in the common symbol.

22. The apparatus according to claim 21, wherein in response to determining that the second type of CSI-RS resource comprises a first partial resource located in the downlink subband in the SBFD symbol and a second partial resource located in an uplink subband or a guard subband in the SBFD symbol, when the second receiving module receives the CSI-RS sent by the base station based on the second type of CSI-RS resource in the first CSI-RS resource set, the second receiving module is specifically configured to:

in response to determining that downlink data is allowed to be transmitted outside the downlink subband in the SBFD symbol, receive the CSI-RS based on the first partial resource and the second partial resource of the second type of CSI-RS resource; or

in response to determining that downlink data is not allowed to be transmitted outside the downlink subband in the SBFD symbol,

prohibit receiving the CSI-RS based on the first partial resource and the second partial resource of the second type of CSI-RS resource; or,

receive the CSI-RS based on the first partial resource of the second type of CSI-RS resource, and prohibiting receiving the CSI-RS based on the second partial resource of the second type of CSI-RS resource.

23. The apparatus according to claim 22, further comprising:

a sending module, configured to: after receiving the CSI-RS based on the first partial resource of the second type of CSI-RS resource, and prohibiting receiving the CSI-RS based on the second partial resource of the second type of CSI-RS resource, obtain first channel state information by measuring the CSI-RS received at the first partial resource of the second type of CSI-RS resource, and send the first channel state information to the base station; and

after prohibiting receiving the CSI-RS based on the first partial resource and the second partial resource of the second type of CSI-RS resource, perform measurement based on a CSI-RS that does not overlap with the uplink subband or the guard subband in a previous period, determine a measurement result as channel state information associated with a current period, and send the channel state information to the base station.

24. The apparatus according to claim 23, wherein,

the sending module is further configured to: after receiving the CSI-RS sent by the base station based on the first type of CSI-RS resource in the first CSI-RS resource set, obtain second channel state information by measuring the CSI-RS received at the first type of CSI-RS resource, and send the second channel state information to the base station;

wherein, when the sending module sends the first channel state information to the base station and sends the second channel state information to the base station, the sending module is specifically configured to:

in response to determining that the first channel state information comprises pieces of first layer 1 reference signal receiving power (L1-RSRP) and the second channel state information comprises pieces of second L1-RSRP,

select N pieces of first L1-RSRP from the pieces of first L1-RSRP and select N pieces of second L1-RSRP from the pieces of second L1-RSRP, and send the N pieces of first L1-RSRP and the N pieces of second L1-RSRP to the base station; or,

select 2N pieces of L1-RSRP from the pieces of first L1-RSRP and the pieces of second L1-RSRP, and send the 2N pieces of L1-RSRP to the base station; and/or,

in response to determining that the first channel state information comprises a plurality of first L1-SINRs and the second channel state information comprises a plurality of second layer 1 signal-interference-noise ratio (L1-SINRs),

select N first L1-SINRs from the plurality of first L1-SINRs and select N second L1-SINRs from the plurality of second L1-SINRs, and send the N first L1- SINRs and the N second L1- SINRs to the base station; or, select 2N L1-SINRs from the plurality of first L1-SINRs and the plurality of second L1-SINRs, and sending the 2N L1-SINRs to the base station.

25. The apparatus according to claim 23, wherein when the sending module obtains the first channel state information by measuring the CSI-RS received at the first partial resource of the second type of CSI-RS resource, the sending module is specifically configured to:

in response to determining that the first partial resource of the second type of CSI-RS resource corresponds to at least one channel state information (CSI) subband, for each CSI subband,

in response to determining that the CSI subband completely overlaps with the uplink subband or the guard subband in the SBFD symbol, prohibit measuring a CSI-RS received at the CSI subband; in response to determining that the CSI subband does not overlap with the uplink subband or the guard subband in the SBFD symbol, obtain a measurement result of the CSI subband by measuring the CSI-RS received at the CSI subband; in response to determining that the CSI subband partially overlaps with the uplink subband or the guard subband in the SBFD symbol,

prohibit measuring the CSI-RS received at the CSI subband; or, determine whether to measure the CSI-RS received at the CSI subband according to a size of non-overlapping resource of the CSI subband, in response to determining to measure the CSI-RS received at the CSI subband, obtain the measurement result of the CSI subband by measuring the CSI-RS received at the CSI subband, or in response to determining not to measure the CSI-RS received at the CSI subband, prohibit measuring the CSI-RS received at the CSI subband; and

determine the first channel state information based on the measurement result of each CSI subband.

26. The apparatus according to claim 25, wherein,

the first receiving module is further configured to receive first indication information sent by the base station, wherein the first indication information is used to indicate to prohibit transmitting the CSI-RS based on the first partial resource and the second partial resource of the second type of CSI-RS resource; or, used to indicate to transmit the CSI-RS based on the first partial resource of the second type of CSI-RS resource, and prohibit transmitting the CSI-RS based on the second partial resource of the second type of CSI-RS resource; and in response to determining that the first indication information is used to indicate to transmit the CSI-RS based on the first partial resource of the second type of CSI-RS resource, and prohibit transmitting the CSI-RS resource based on the second partial resource of the second type of CSI-RS resource, the first receiving module is further configured to receive the second indication information sent by the base station, wherein the second indication information is used to indicate to prohibit measuring the CSI-RS received at the CSI subband overlapping with the uplink subband or the guard subband, or to indicate whether to measure the CSI-RS received at the CSI subband according to the size of non-overlapping resource of the CSI subband.

27. The apparatus according to claim 23, wherein,

the sending module is further configured to: after receiving the CSI-RS sent by the base station based on the first type of CSI-RS resource in the first CSI-RS resource set, obtain second channel state information by measuring the CSI-RS received at the first type of CSI-RS resource, and transmit the second channel state information to the base station; wherein the first channel state information and the second channel state information are sent to the base station through different uplink resources; or, the first channel state information and the second channel state information are sent to the base station through a same uplink resource.

28. The apparatus according to claim 21, wherein the third type of CSI-RS resource only comprises a resource located in the downlink subband in the SBFD symbol,

in response to determining that the third type of CSI-RS resource only occupies continuous resources of the downlink subband, the second resource configuration information comprises a resource block (RB) starting position and a number of occupied RBs corresponding to the continuous resources; and

in response to determining that the third type of CSI-RS resource occupies two discontinuous resources in the downlink subband, the second resource configuration information comprises RB starting positions and numbers of occupied RBs corresponding to the two resources, respectively.

29. The apparatus according to claim 28,

wherein an RB starting position corresponding to the third type of CSI-RS resource is an integer multiple of a first value, a number of occupied RBs corresponding to the third type of CSI-RS resource is greater than or equal to a second value, and the number of occupied RBs corresponding to the third type of CSI-RS resource is an integer multiple of the first value; or,

wherein the RB starting position corresponding to the third type of CSI-RS resource is a starting position of the downlink subband in the SBFD symbol, and the number of occupied RBs corresponding to the third type of CSI-RS resource is any value;

wherein, in response to determining that a capability parameter of the user equipment indicates that the user equipment has a capability to support any position as the RB starting position, the RB starting position corresponding to the third type of CSI-RS resource is the starting position of the downlink subband in the SBFD symbol, and the number of occupied RBs corresponding to the third type of CSI-RS resource is any value; or

in response to determining that the capability parameter of the user equipment indicates that the user equipment does not have the capability to support any position as the RB starting position, the RB starting position corresponding to the third type of CSI-RS resource is an integer multiple of the first value, and the number of occupied RBs corresponding to the third type of CSI-RS resource is greater than or equal to the second value, and the number of occupied RBs corresponding to the third type of CSI-RS resource is an integer multiple of the first value.

30. The apparatus according to any one of claims 20-29, wherein,

the first receiving module is further configured to receive third indication information sent by the base station, wherein the third indication information is used to indicate that the downlink data is allowed to be transmitted outside the downlink subband in the SBFD symbol, or used to indicate that downlink data is not allowed to be transmitted outside the downlink subband in the SBFD symbol; and/or,

the first receiving module is further configured to receive fourth indication information sent by the base station, wherein the fourth indication information is used to indicate that uplink data is allowed to be transmitted outside an uplink subband in the SBFD symbol, or used to indicate that the uplink data is not allowed to be transmitted outside the uplink subband in the SBFD symbol.

31. A channel state information reference signal (CSI-RS) transmission apparatus, performed by a base station, comprising:

a first sending module configured to send resource configuration information corresponding to at least one CSI-RS resource set to a user equipment, wherein the resource configuration information is used to indicate the at least one CSI-RS resource set used by the user equipment, and the at least one CSI-RS resource set comprises a CSI-RS resource located in a subband full duplex (SBFD) symbol, the CSI-RS resource exceeds a range of a downlink subband in the SBFD symbol, or the CSI-RS resource is located within a downlink subband in the SBFD symbol; and

a second sending module is configured to send a CSI-RS to the user equipment based on the CSI-RS resource in the at least one CSI-RS resource set, so that the user equipment receives the CSI-RS based on the CSI-RS resource in the at least one CSI-RS resource set.

32. The apparatus according to claim 31, wherein when the first sending module sends the resource configuration information corresponding to the at least one CSI-RS resource set to the user equipment, the first sending module is specifically configured to:

in response to determining that the user equipment corresponds to a first CSI-RS resource set, send first resource configuration information corresponding to the first CSI-RS resource set to the user equipment, wherein the first CSI-RS resource set comprises a first type of CSI-RS resource located in a common symbol and a second type of CSI-RS resource located in the SBFD symbol, and the second type of CSI-RS resource exceeds the range of the downlink subband in the SBFD symbol; or

in response to determining that the user equipment corresponds to a second CSI-RS resource set and a third CSI-RS resource set, send second resource configuration information corresponding to the second CSI-RS resource set and third resource configuration information corresponding to the third CSI-RS resource set, wherein the second CSI-RS resource set comprises a third type of CSI-RS resource located in the SBFD symbol, and the third type of CSI-RS resource is located in the downlink subband in the SBFD symbol, the third CSI-RS resource set comprises a fourth type of CSI-RS resource located in the common symbol.

33. The apparatus according to claim 32, wherein in response to determining that the second type of CSI-RS resource comprises a first partial resource located in the downlink subband in the SBFD symbol and a second partial resource located in an uplink subband or a guard subband in the SBFD symbol, when the second sending module sends the CSI-RS to the user equipment based on the second type of CSI-RS resource in the first CSI-RS resource set, the second receiving module is specifically configured to:

in response to determining that downlink data is allowed to be transmitted outside the downlink subband in the SBFD symbol, send the CSI-RS based on the first partial resource and the second partial resource of the second type of CSI-RS resource; or

in response to determining that downlink data is not allowed to be transmitted outside the downlink subband in the SBFD symbol,

prohibit sending the CSI-RS resource based on the first partial resource and the second partial resource of the second type of CSI-RS resource; or,

send the CSI-RS based on the first partial resource of the second type of CSI-RS resource, and prohibit sending the CSI-RS resource based on the second partial resource of the second type of CSI-RS resource.

34. The apparatus according to claim 33, wherein,

the first sending module is further configured to send first indication information to the user equipment, wherein the first indication information is used to indicate to prohibit transmitting the CSI-RS based on the first partial resource and the second partial resource of the second type of CSI-RS resource; or, used to indicate to transmit the CSI-RS based on the first partial resource of the second type of CSI-RS resource, and prohibit transmitting the CSI-RS based on the second partial resource of the second type of CSI-RS resource; and

in response to determining that the first indication information is used to indicate to transmit the CSI-RS based on the first partial resource of the second type of CSI-RS resource, and prohibit transmitting the CSI-RS resource based on the second partial resource of the second type of CSI-RS resource, wherein the first sending module is further configured to send second indication information to the user equipment, wherein the second indication information is used to indicate to prohibit measuring the CSI-RS received at the CSI subband overlapping with the uplink subband or the guard subband, or used to indicate whether to measure the CSI-RS received at the CSI subband according to a size of non-overlapping resource of the CSI subband.

35. The apparatus according to claim 32, wherein the third type of CSI-RS resource only comprises a resource located in the downlink subband in the SBFD symbol,

in response to determining that the third type of CSI-RS resource only occupies continuous resources of the downlink subband, the second resource configuration information comprises a resource block (RB) starting position and a number of occupied RBs corresponding to the continuous resources;

in response to determining that the third type of CSI-RS resource occupies two discontinuous resources in the downlink subband, the second resource configuration information comprises RB starting positions and numbers of occupied RBs corresponding to the two resources, respectively.

36. The apparatus according to claim 35,

wherein an RB starting position corresponding to the third type of CSI-RS resource is an integer multiple of a first value, a number of occupied RBs corresponding to the third type of CSI-RS resource is greater than or equal to a second value, and the number of occupied RBs corresponding to the third type of CSI-RS resource is an integer multiple of the first value; or,

wherein the RB starting position corresponding to the third type of CSI-RS resource is a starting position of the downlink subband in the SBFD symbol, and the number of occupied RBs corresponding to the third type of CSI-RS resource is any value;

wherein, in response to determining that a capability parameter of the user equipment indicates that the user equipment has a capability to support any position as the RB starting position, the RB starting position corresponding to the third type of CSI-RS resource is the starting position of the downlink subband in the SBFD symbol, and the number of occupied RBs corresponding to the third type of CSI-RS resource is any value; or in response to determining that the capability parameter of the user equipment indicates that the user equipment does not have the capability to support any position as the RB starting position, the RB starting position corresponding to the third type of CSI-RS resource is an integer multiple of the first value, and the number of occupied RBs corresponding to the third type of CSI-RS resource is greater than or equal to the second value, and the number of occupied RBs corresponding to the third type of CSI-RS resource is an integer multiple of the first value.

**37.** The apparatus according to any one of claims 31-36, wherein,

the first sending module is further configured to send third indication information to the user equipment, wherein the third indication information is used to indicate that the downlink data is allowed to be transmitted outside the downlink subband in the SBFD symbol, or used to indicate that downlink data is not allowed to be transmitted outside the downlink subband in the SBFD symbol; and/or,

the first sending module is further configured to send fourth indication information to the user equipment, wherein the fourth indication information is used to indicate that uplink data is allowed to be transmitted outside an uplink subband in the SBFD symbol, or used to indicate that the uplink data is not allowed to be transmitted outside the uplink subband in the SBFD symbol.

**38.** The apparatus according to claim 33, when the second sending module sends the CSI-RS based on the first partial resource of the second type of CSI-RS resource, and prohibits sending the CSI-RS resource based on the second partial resource of the second type of CSI-RS resource, the second sending module is specifically configured to:

determine target transmission power based on maximum transmission power of the second type of CSI-RS resource; or, determine the target transmission power based on the maximum transmission power and a resource ratio of the second type of CSI-RS resource, wherein the resource ratio is a resource ratio of the first partial resource to the second type of CSI-RS resource;

send the CSI-RS based on the first partial resource at the target transmission power.

**39.** A user equipment, comprising a processor and a machine-readable storage medium, wherein the machine-readable storage medium stores machine-executable instructions executable by the processor, and the processor is configured to execute the machine-executable instructions to implement the method according to any one of claims 1-11.

**40.** A base station, comprising a processor and a machine-readable storage medium, wherein the machine-readable storage medium stores machine-executable instructions executable by the processor, and the processor is configured to execute the machine-executable instructions to implement the method according to any one of claims 12-19.

Receive resource configuration information corresponding to at least one CSI-RS resource set sent by a base station, where the resource configuration information is used to indicate the at least one CSI-RS resource set, and the at least one CSI-RS resource set includes a CSI-RS resource located in an SBFD symbol, the CSI-RS resource may exceed a range of a downlink subband in the SBFD symbol, or the CSI-RS resource may locate within the downlink subband in the SBFD symbol

111

Receive a CSI-RS sent by the base station based on the CSI-RS resource in the at least one CSI-RS resource set

112

FIG. 1A

Send resource configuration information corresponding to at least one CSI-RS resource set to a user equipment, where the resource configuration information is used to indicate the at least one CSI-RS resource set used by the user equipment, and the at least one CSI-RS resource set includes a CSI-RS resource located in an SBFD symbol, the CSI-RS resource may exceed a range of a downlink subband in the SBFD symbol, or the CSI-RS resource may locate within the downlink subband in the SBFD symbol

121

Send a CSI-RS to the user equipment based on the CSI-RS resource in the at least one CSI-RS resource set, so that the user equipment receives the CSI-RS based on the CSI-RS resource in the CSI-RS resource set

122

FIG. 1B

| Slot | 0 | 1 | 2 | 3 | 4 |
|------|---|---|---|---|---|
| PRB | DL | DL Subband<br>UL Subband<br>DL Subband | DL Subband<br>UL Subband<br>DL Subband | DL Subband<br>UL Subband<br>DL Subband | UL |

FIG. 2

FIG. 3

FIG. 4

FIG. 5

```
┌──────────────────────────────────────────────┐
│  ┌─────────────────┐      ┌─────────────────┐ │
│  │  First receiving│──────│ Second receiving│ │
│  │   module 611    │      │   module 612    │ │
│  └─────────────────┘      └─────────────────┘ │
│          CSI-RS transmission apparatus        │
└──────────────────────────────────────────────┘
```

FIG. 6A

```
┌──────────────────────────────────────────────┐
│  ┌─────────────────┐      ┌─────────────────┐ │
│  │  First sending  │──────│ Second sending  │ │
│  │   module 621    │      │   module 622    │ │
│  └─────────────────┘      └─────────────────┘ │
│          CSI-RS transmission apparatus        │
└──────────────────────────────────────────────┘
```

FIG. 6B

Base station

| | | 713 | | 714 |
| Processor 711 | | | Radio frequency circuit | |
| Machine-readable storage medium 712 | ← Peripheral interface → | | | |
| | | | Power supply 715 | |

FIG. 7A

FIG. 7B

## INTERNATIONAL SEARCH REPORT

| International application No. |
| --- |
| **PCT/CN2023/088470** |

**A.    CLASSIFICATION OF SUBJECT MATTER**

H04L 5/00(2006.01)i;  H04W72/00(2023.01)i

According to International Patent Classification (IPC) or to both national classification and IPC

**B.    FIELDS SEARCHED**

Minimum documentation searched (classification system followed by classification symbols)

IPC: H04L, H04W

Documentation searched other than minimum documentation to the extent that such documents are included in the fields searched

Electronic data base consulted during the international search (name of data base and, where practicable, search terms used)

CNTXT, ENTXTC, WPABSC, ENTXT, WPABS, VEN, CNKI, 3GPP: 资源, 配置, 信道状态信息参考信号, 子带全双工, 下行, 上行, 超出, 之外, 保护子带, 灵活子带, resource, configure, CSI-RS, SBF, downlink, uplink, out, guard, flexible, subband

**C.    DOCUMENTS CONSIDERED TO BE RELEVANT**

| Category* | Citation of document, with indication, where appropriate, of the relevant passages | Relevant to claim No. |
| --- | --- | --- |
| X | WO 2022006001 A1 (QUALCOMM INC.) 06 January 2022 (2022-01-06)<br>        claims 1-30 | 1-40 |
| A | WO 2021217298 A1 (QUALCOMM INC. et al.) 04 November 2021 (2021-11-04)<br>        entire document | 1-40 |
| A | CN 115836507 A (QUALCOMM INC.) 21 March 2023 (2023-03-21)<br>        entire document | 1-40 |
| A | CN 108063635 A (HUAWEI TECHNOLOGIES CO., LTD.) 22 May 2018 (2018-05-22)<br>        entire document | 1-40 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **14 June 2023** | **20 June 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/088470**

| Patent document cited in search report | | | Publication date (day/month/year) | Patent family member(s) | | | Publication date (day/month/year) |
|---|---|---|---|---|---|---|---|
| WO | 2022006001 | A1 | 06 January 2022 | None | | | |
| WO | 2021217298 | A1 | 04 November 2021 | None | | | |
| CN | 115836507 | A | 21 March 2023 | WO | 2022015760 | A2 | 20 January 2022 |
| | | | | WO | 2022015760 | A3 | 24 February 2022 |
| | | | | EP | 4183093 | A2 | 24 May 2023 |
| CN | 108063635 | A | 22 May 2018 | WO | 2014000227 | A1 | 03 January 2014 |

Form PCT/ISA/210 (patent family annex) (July 2022)